# EUROPEAN PATENT APPLICATION

(11) **EP 1 688 461 A1**
(43) Date of publication of application: **09.08.2006**
(21) Application number: 04792859.3
(22) Date of filing: 22.10.2004
(51) Int. Cl.: C08L 59/00, C08K 3/00, C08K 5/00, C08J 5/00

(54) **POLYACETAL RESIN COMPOSITION AND MOLDED ARTICLE THEREOF**

(30) Priority: 07.11.2003 JP 2003379092
(71) Applicant: Polyplastics Co., Ltd., Tokyo 108-8280 (JP)
(72) Inventor: HARASHINA, Hatsuhiko, Fuji-shi, Shizuoka 168533 (JP); KURITA, Hayato, Fuji-shi, Shizuoka 4168533 (JP)
(74) Representative: Peel, James Peter
(86) International application number: PCT/JP2004/015717
(87) International publication number: WO 2005/044917

(57) **Abstract**

A polyacetal resin composition comprises a polyacetal resin having a trioxane content of not more than 100 ppm (preferably not more than 50 ppm, and more preferably not more than 10 ppm) and at least one stabilizer selected from the group consisting of an antioxidant, a formaldehyde emission inhibitor, a processing stabilizer and a heat stabilizer. The polyacetal resin may be a polyacetal resin (particularly a polyacetal copolymer) in which the trioxane amount is reduced by a solvent treatment and/or a heat treatment. Moreover, the polyacetal resin composition may further contain at least one additive selected from the group consisting of a weather(light)-resistantstabilizer, an impact resistance improver, a gloss control agent, a sliding improver, a coloring agent, and a filler. Such a polyacetal resin composition can reduce the amount of trioxane elution and/or the amount of a volatile organic compound from a molded product thereof.

## Description

### TECHNICAL FIELD

The present invention relates to a polyacetal resin composition in which the trioxane content (amount) is remarkably inhibited; to a process for producing the same; and to a polyacetal molded product (shaped or molded article) formed from the resin composition, in which the amount of trioxane elution and/or the amount of a volatile organic compound emission (generation) are significantly reduced.

### BACKGROUND ART

There has been known a polyacetal resin homopolymer and a polyacetal resin copolymer (polyacetal copolymer) as a polyacetal resin, in particular, the polyacetal resin copolymer which is excellent in heat stability has been employed in various fields. The polyacetal resin copolymer is produced by a copolymerization of trioxane as a monomer material with a cyclic ether or cyclic formal such as ethylene oxide, 1,3-dioxolane, diethylene glycol formal, or 1,4-butanediol formal in the presence of a cationic polymerization catalyst, followed by a series of steps such as a step for catalyst deactivation after polymerization, a step for stabilizing a terminal group, a step for blending a stabilizer, and others.

The crude polyacetal copolymer immediately after polymerization, which is obtained through the above steps contains a large amount of unreacted trioxane. Such an unreacted trioxane is removed from the copolymer to a level which does not cause a practical problem in ordinary usages (applications), by a purification step such as a washing step or an exhaustion step. However, recently, as expanding applications of polyacetal resins to a food application field or a commodity application field, in some cases, the elution of trioxane or the emission of a volatile organic compound(s) (VOC) including trioxanefrom a polyacetal resin is concerned. Accordingly, it is required to further reduce the trioxane content in the polyacetal resin copolymer, further to lessen the elution of trioxane or the emission of a volatile organic compound (VOC) including trioxane from a molded product of a polyacetal resin.

Moreover, trioxane is a cyclic trimer of formaldehyde, and although trioxane itself is relatively stable, trioxane could be a potential release source of formaldehyde by an action of heat or an acid. Accordingly, lowering of the trioxane content to the utmost limit has been desired. Until now, with respect to aresin composition having a reduced formaldehyde content in the polyacetal resin as well as a molded product (shaped or molded article) therefrom, in which formaldehyde emission from the molded product is reduced, various improvements are conducted by a blending technique of a stabilizer such as an antioxidant or a basic nitrogen-containing compound. For example, the following compositions have been known: (1) a polyacetal resin composition comprising a polyacetal resin and a glyoxyldiureide compound [Japanese Patent Application Laid-Open No. 182928/1998 (JP-10-182928A) (Patent Document 1)]; (2) a polyacetal resin composition comprising a polyacetal resin and a cyclic nitrogen-containing compound (glycocyamidine or a derivative thereof, such as creatinine) [Japanese Patent Application Laid-Open No. 335518/1999 (JP-11-335518A) (Patent Document 2)]; (3) a polyacetal resin composition comprising a polyacetal resin, at least one processing stabilizer selected from the group consisting of a polyalkylene glycol, a fatty acid ester, a fatty acid amide and a metal salt of a fatty acid, and at least one inhibitor selected from the group consisting of urea or a derivative thereof and an amidine derivative [Japanese Patent Application Laid-Open No. 26704/2000 (JP-2000-26704A) (Patent Document 3)]; (4) a polyacetal resin composition comprising a polyacetal resin, a core-shell polymer having a soft polymer as a core and a hard polymer as a shell, and at least one inhibitor selected from the group consisting of urea or a derivative thereof and an amidine derivative [Japanese Patent Application Laid-Open No. 26705/2000 (JP-2000-26705A) (Patent Document 4)]; (5) a polyacetal resin composition in which a polyacetal resin particulate, and an inhibitor comprising at least one active hydrogen-containing compound selected from the group consisting of a urea compound and an amidine compound coexist [Japanese Patent Application Laid-Open No. 44769/2000 (JP-2000-44769A) (Patent Document 5)]; (6) a polyacetal resin composition comprising a polyacetal resin, and a carboxyl group-containing compound having a pKa of not less than 3.6 [Japanese Patent Application Laid-Open No. 239484/2000 (JP-2000-239484A) (Patent Document 6)]; (7) a polyacetal resin composition comprising a polyacetal resin, an ionomer resin, and at least one inhibitor selected from the group consisting of urea or a derivative thereof and an amidine derivative [Japanese Patent Application Laid-Open No. 239485/2000 (JP-2000-239485A) (Patent Document 7)]; (8) a polyacetal-series resin composition comprising a polyacetal-series resin, and a modified phenol resin (a condensed product of a phenol compound, a basic nitrogen-containing compound and an aldehyde compound) [Japanese Patent Application Laid-Open No. 212384/2002 (JP-2002-212384A) (Patent Document 8)]; (9) a polyacetal resin composition comprising a polyacetal resin, a hindered phenol compound, a spiro-compound having a triazine ring, and at least one member selected from the group consisting of a processing stabilizer and a heat stabilizer [Japanese Patent Application Laid-Open No. 113289/2003 (JP-2003-113289A) (Patent Document 9)]; and others.

However, it is difficult to reduce the amount of trioxane elution or the amount of a volatile organic compound including trioxane to a higher level, in such a conventional polyacetal resin composition or a molded product thereof. Moreover, it is also difficult to greatly inhibit formaldehyde emission, in particular the amount of formaldehyde emitted (or generated) from a molded product.
(Patent Document 1) JP-10-182928A (Claim 1)
(Patent Document 2) JP-11-335518A (Claim 1)
(Patent Document 3) JP-12-26704A (Claim 1)
(Patent Document 4) JP-12-26705A (Claim 1)
(Patent Document 5) JP-12-44769A (Claim 1)
(Patent Document 6) JP-2000-239484A (Claim 1)
(Patent Document 7) JP-2000-239485A (Claim 1)
(Patent Document 8) JP-2002-212384A (Claim 1)
(Patent Document 9) JP-2003-113289A (Claim 1)

### DISCLOSURE OF THE INVENTION

### PROBLEMS TO BE SOLVED BY THE INVENTION

It is therefore an object of the present invention to provide a polyacetal resin composition capable of significantly reducing the amount of trioxane elution or the amount of a volatile organic compound including trioxane; and a process for producing the same; as well as a polyacetal resin molded product therefrom.

It is another object of the present invention to provide a polyacetal resin composition in which the amount of formaldehyde emission from a polyacetal resin is inhibited to a significantly low level; and a process for producing the same; as well as a molded product therefrom.

It is further object of the present invention to provide a polyacetal resin composition in which the amount of trioxane elution or the amount of a volatile organic compound including trioxane is lowered, in addition formaldehyde emission (generation) is inhibited, further characteristics such as weather (light)-resistant stability, impact resistance, (low) gloss property, sliding property or mechanical property are improved; and a process for producing the same; as well as an a molded product therefrom.

### MEANS TO SOLVE THE PROBLEMS

The inventors of the present invention made intensive studies and searches to achieve the above objects and finally found that the combination of a polyacetal resin having a specific trioxane content with a specific stabilizer (e.g., a formaldehyde emission inhibitor) contributes to remarkable lowering of the trioxane elution as well as the amount of a volatile organic compound including trioxane from a polyacetal resin composition (and a molded product thereof), and further found that use of a polyacetal copolymer comprising a specific terminal group constitution (structure) as a polyacetal resin in combination with an formaldehyde emission inhibitor as a stabilizer also contributes to significant decrease of formaldehyde emission (generation) from the resin composition (and a molded product thereof) The present invention was accomplished based on the above findings.

That is, the polyacetal resin composition of the present invention is a polyacetal resin composition which comprises a polyacetal resin and at least one stabilizer selected from the group consisting of an antioxidant, a formaldehyde emission inhibitor, a processing stabilizer, and a heat stabilizer, wherein the trioxane content in the polyacetal resin is not more than 100 ppm (preferably not more than 50 ppm, and more preferably not more than 10 ppm). The polyacetal resin (particularly, a polyacetal copolymer) may comprise a polyacetal resin in which the trioxane content is reduced by a solvent treatment and/or a heat treatment. To be more precise, the polyacetal resin may comprise a polyacetal resin in which the trioxane content is reduced by at least one treatment selected from the group consisting of a solvent treatment with a poor solvent for the polyacetal resin, and the heat treatment. In the solvent treatment, it is preferred to use a solvent being a poor solvent for the polyacetal resin and (as well as) being a good solvent for trioxane. The heat treatment may include at least one heat treatment selected from the group consisting of an air flow heat treatment, an inactive (inert) gas flow heat treatment, a heated vapor (e.g., super-heated vapor) treatment, and a vacuum heat treatment. In the resin composition, the preferred polyacetal resin includes a polyacetal copolymer in which the trioxane content is reduced by a treatment with an aqueous medium or an alcohol-containing aqueous medium under heating of not lower than 80°C, a polyacetal copolymer in which the trioxane content is reduced by a treatment with a basic aqueous medium under heating of not lower than 80°C, and the like.

Further, in the resin composition, the preferred polyacetal resin may also include a polyacetal resin (polyacetal copolymer) having a specific terminal group amount. As such a polyacetal resin, there maybe exemplified (i) a polyacetal copolymer having a terminal hemiformal group of not more than 1.2 mmol/kg, and a terminal formyl group of not more than 1.2 mmol/kg, (ii) a polyacetal copolymer having an unstable terminal group of not more than 0.5% by weight, and others. Further preferred polyacetal resin may be (iii) a polyacetal copolymer having a terminal hemiformal group of not more than 0.7 mmol/kg, and a terminal formyl group of not more than 1 mmol/kg, (iv) a polyacetal copolymer having an unstable terminal group of not more than 0.4% by weight.

The antioxidant may include at least one member selected from the group consisting of a hindered phenol compound and a hindered amine compound. The formaldehyde emission inhibitor may comprise at least one compound having an active hydrogen atom and selected from the group consisting of a basic nitrogen-containing compound (particularly, at least one basic nitrogen-containing compound selected from the group consisting of an aminotriazine compound, a guanidine compound, a urea compound, a hydrazine compound, an amino acid compound, an amino alcohol compound, an imide compound, an imidazole compound, and an amide compound), an active methylene compound (active methylene group-containing compound), and a polyphenol compound. In the preferred embodiment, the formaldehyde emission inhibitor may comprise at least one basic nitrogen-containing compound selected from the group consisting of a melamine compound, a guanamine compound, a creatinine compound, a biurea compound, a cyclic urea compound, a carboxylic acid hydrazide compound, and a polyamide compound. Moreover, the processing stabilizer may include at least one member selected from the group consisting of a higher fatty acid or a derivative thereof, a polyoxyalkylene glycol, and a silicone compound. The heat stabilizer may comprise at least one member selected from the group consisting of an organic carboxylic acid or a metal salt thereof, an alkali metal or alkaline earth metal compound, a phosphine compound, a hydrotalcite, and a zeolite. The preferred polyacetal resin composition includes a polyacetal resin composition which comprises the polyacetal resin (particularly, the polyacetal copolymer having a trioxane content of not more than 100 ppm), an antioxidant, a formaldehyde emission inhibitor, a processing stabilizer, and a heat stabilizer, wherein, relative to 100 parts by weight of the polyacetal resin (particularly, the polyacetal copolymer having a trioxane content of not more than 100 ppm), the proportion of the antioxidant is 0.005 to 3 parts by weight, the proportion of the formaldehyde emission inhibitor is 0.001 to 20 parts by weight, the proportion of the processing stabilizer is 0.01 to 5 parts by weight, and the proportion of the heat stabilizer is 0.001 to 5 parts by weight.

The polyacetal resin composition of the present invention may further comprise at least one additive selected from the group consisting of a weather (light)-resistant stabilizer, an impact resistance improver, a gloss control agent, an agent for improving sliding property (slide improver), a coloring agent, and a filler. The weather (light)-resistant stabilizer may include at least one member selected from the group consisting of a benzotriazole compound, a benzophenone compound, an aromatic benzoate compound, a cyanoacrylate compound, an oxalic anilide compound, a hydroxyphenyl-1,3,5-triazine compound, and a hindered amine compound. Moreover, the impact resistance improver may comprise at least one member selected from the group consisting of a thermoplastic polyester, a thermoplastic polyurethane, an acrylic core-shell polymer, and a styrenic elastomer. Moreover, the gloss control agent may comprise at least one member selected from the group consisting of an acrylic resin and a styrenic resin. As the agent for improving sliding property, there may be exemplified at least one compound selected from the group consisting of an olefinic polymer, a silicone-series resin, and a fluorine-containing resin. Incidentally, the polyacetal resin composition may comprise a pellet of the polyacetal copolymer having a trioxane content of not more than 100 ppm at least coexistent with a formaldehyde emission inhibitor or a master batch containing a formaldehyde emission inhibitor.

The polyacetal resin composition of the present invention can be produced by mixing the polyacetal resin [particularly, the polyacetal resin (the polyacetal copolymer) having the trioxane content of not more than 100 ppm] and at least one stabilizer selected from the group consisting of an antioxidant, a formaldehyde emission inhibitor, a processing stabilizer, and a heat stabilizer. For example, the polyacetal resin composition of the present invention may be produced (i) by a method which comprises melt-mixing the polyacetal resin (e.g., the polyacetal resin having a trioxane content of not more than 100 ppm) and at least a formaldehyde emission inhibitor with an extruder having an exhaust port, wherein in the melt-mixing process, at least one processing auxiliary selected from the group consisting of water and an alcohol is added to the mixture, and a volatile component is exhausted through the exhaust port; (ii) by a method which comprises mixing the polyacetal resin (e.g. , the polyacetal resin having a trioxane content of not more than 100 ppm) and at least one stabilizer selected from the group consisting of an antioxidant, a formaldehyde emission inhibitor, a processing stabilizer, and a heat stabilizer, wherein at least the formaldehyde emission inhibitor is fed through a side feed port of an extruder; (iii) by a method which comprises melt-mixing the polyacetal resin (e.g. , the polyacetal resin having a trioxane content of not more than 100 ppm) and a formaldehyde emission inhibitor with an extruder, wherein the average residence time of melt-mixing (melt-kneading) is not longer than 300 seconds; (iv) by a method which comprises melt-mixing the polyacetal resin [particularly, the polyacetal resin (the polyacetal copolymer) having a trioxane content of not more than 100 ppm] and at least one stabilizer selected from the group consisting of an antioxidant, a formaldehyde emission inhibitor, a processing stabilizer and a heat stabilizer with an extruder, and extruding the mixture to prepare a pelletized composition, and further subjecting the pelletized composition to a solvent treatment and/or a heat treatment to obtain the polyacetal resin composition; (v) by a method in which any of the above methods (i) to (iv) are suitably combined; and others.

The present invention embraces a molded product which comprises the polyacetal resin composition. In the molded product, the amount of trioxane elution is extremely reduced, and the amount of trioxane elution extracted from the molded product with distilled water by heating under reflux for 2 hours is not more than 10 mg (preferably not more than 5 mg, and more preferably not more than 1 mg) per 1 kg of the molded product. Further, in the molded product of the present invention, the amount of a volatile organic compound including trioxane is significantly reduced, and the amount of a volatile organic compound generated under heating at a temperature of 120°C for 5 hours (in accordance with an evaluation condition of Germany's Automotive Standards VDA 277). Moreover, in the molded product of the present invention, the formaldehyde emission (generation) is drastically reduced, and for example, (1) when the molded product is stored in a closed space for 24 hours at a temperature of 80°C, the emission of formaldehyde therefrom is not more than 1.0 µg per 1 cm² of the surface area of the product, and/or (2) when the molded product is stored in a closed space for 3 hours at a temperature of 60°C under a saturated humidity, the emission of formaldehyde therefrom is not more than 1.2 µg per 1 cm² of the surface area of the product. The molded product may be at least one part selected from the group consisting of a food grade part, an automotive part, an electric or electronic device part, an architectural or pipeline part, a household utensil or cosmetic article part, a medical device part, and a photographic part.

### EFFECTS OF THE INVENTION

According to the present invention, since a polyacetal resin composition contains a polyacetal resin in which the trioxane content is reduced, and a stabilizer (e.g., an antioxidant, a formaldehyde emission inhibitor, a processing stabilizer, and a heat stabilizer), the polyacetal resin composition and a molded product thereof ensure to inhibit the amount of trioxane elution as well as the amount of a volatile organic compound including trioxane therefrom to a remarkably low level. Moreover, addition of a small amount of a formaldehyde emission inhibitor to a polyacetal resin in which the trioxane content is reduced ensures to significantly inhibit formaldehyde generation from the polyacetal resin composition and a molded product thereof. Accordingly, circumferential environment (e.g., working environment and using environment) is drastically improvable. Further, addition of other additive(s) (e.g., a weather (light)-resistant stabilizer, an impact resistance improver, a gloss control agent, a slip-improving agent, a coloring agent, and a filler) ensures to inhibit the amount of trioxane elution as well as the amount of a volatile organic compound including trioxane (and the amount of formaldehyde emission) from the polyacetal resin and the molded product at an extremely low level, and further ensures to provide a polyacetal resin composition and a molded product which improve in physical properties such as weather (light)-resistant stability, impact resistance, (low) gloss property, and sliding property.

### DETAILED DESCRIPTION OF THE INVENTION

The resin composition of the present invention comprises a polyacetal resin having a specific trioxane content (amount), and a stabilizer.

### [Polyacetal resin]

The polyacetal resin used in the present invention is a resin having an extremely small amount (content) of trioxane (or free trioxane) in the resin. The content of trioxane in the resin is not more than 100 ppm (about 0 to 100 ppm, e.g., about 0.0001 to 100 ppm), preferably not more than 50 ppm (about 0 to 50 ppm, e.g., about 0.01 to 50 ppm), and more preferably not more than 10 ppm (about 0 to 10 ppm, e.g., about 0.05 to 10 ppm).

Incidentally, the term "the content (amount) of trioxane" is an index with respect to a qualification of a polymer. The content of trioxane can be quantitatively determined in the following way, that is, dissolving 1 g of a polyacetal resin (a polyacetal copolymer) in 10 mL of hexafluoroisopropanol (HFIP), reprecipitating the obtained solution in 40 mL of acetone, and measuring the trioxane amount by means of GC/MS method. The content of trioxane can be shown by mg/kg (ppm) unit relative to the polyacetal resin.

The polyacetal resin may be a homopolymer containing an oxymethylene group (-OCH₂-) as the only constitutional unit, and usually is a copolymer (or a polyacetal copolymer) containing an oxymethylene group (particularly, an oxymethylene group derived from trioxane) as a main constitutional unit, and a comonomer unit other than the oxymethylene group. In the copolymer, the comonomer unit may include an oxyalkylene unit of about 2 to 6 carbon atoms (preferably about 2 to 4 carbon atoms), for example, oxyethylene group (-OCH₂CH₂-), oxypropylene group, and oxytetramethylene group. The content of the comonomer unit may be small and may be selected from the range of about 0.01 to 20 mol%, preferably about 0.03 to 15 mol% (e.g., 0.05 to 10 mol%), and more preferably about 0.1 to 10 mol%, relative to the whole units constituting the polyacetal copolymer.

The polyacetal copolymer may be a copolymer containing two components, a terpolymer containing three components, and so on. The polyacetal copolymer may be also a random copolymer, in addition, a block copolymer, a graft copolymer, and others. Moreover, the polyacetal resin may have a linear (or straight) structure or branched structure, or may have a crosslinked structure. In addition, concerning the polyacetal resin, there is no particular limitation on the degree of polymerization, the degree of branching, or the degree of crosslinking, only provided it can be melt-molded. The polyacetal resin may comprise single component or may be a blended matter containing polyacetal resins of not less than two species in an arbitrary proportion.

The polyacetal copolymer may be produced by polymerizing an oxymethylene group-forming monomer, such as an aldehyde (e.g., trioxane, formaldehyde, and paraformaldehyde) and a copolymerizable component. The aldehyde may be used singly or in combination. The aldehyde usually comprises at least trioxane in many cases, and may comprise (consist) trioxane singly.

The copolymerizable component may include a monomer constituting an oxyC₂₋₄alkylene unit such as a cyclic ether (e.g., ethylene oxide, propylene oxide, butylene oxide, styrene oxide, cyclohexene oxide, or 1,3-dioxolane), and a cyclic formal (e.g., diethylene glycol formal or 1,4-butanediol formal). Further, as the copolymerizable component, an alkyl- or arylglycidyl ether (e.g., methylglycidyl ether, ethylglycidyl ether, phenylglycidyl ether, naphthylglycidyl ether), an alkylene or polyoxyalkylene glycol diglycidyl ether (e.g., ethylene glycol diglycidyl ether, triethylene glycol diglycidyl ether, butanediol diglycidyl ether), an alkyl- or aryl glycidyl alcohol, a cyclic ester (e.g., β-propiolactone), or a vinyl compound (e.g., styrene, and vinyl ether) may be also employed. These copolymerizable components may be used singly or in combination.

Incidentally, the molecular weight (melt index) of the polyacetal copolymer used in the present invention can be adjusted by coexisting a known chain transfer agent as a molecular-weight adjusting agent in an arbitrary amount, for example, a low-molecular-weight acetal having alkoxy groups in both terminals (ends), such as methylal.

The melt index (melt flow rate) of the polyacetal resin may be, for example, about 0.1 to 100 g/10 minutes, preferably about 0. 5 to 80 g/10 minutes, and more preferably about 1.0 to 50 g/10 minutes.

Moreover, in the present description, the term "polyacetal resin" embraces a polyacetal resin containing various additives in advance. That is, as the polyacetal resin, there may be used a stabilized polyacetal resin which contains after-mentioned various additives in advance. Examples of the additive may include, for example, an antioxidant, a formaldehyde emission inhibitor (particularly, a basic nitrogen-containing compound), a processing stabilizer, a heat stabilizer, a weather-resistant stabilizer, a coloring agent, and others. The additives may be precedently added to a polyacetal resin singly or in combination. Among these additives, the preferred additive includes an antioxidant (e.g., a hindered phenol compound, a hindered amine compound), a basic nitrogen-containing compound (particularly, an aminotriazine compound, a polyamide-series resin, a crosslinked poly(meth)acrylic acid amide copolymer, and others), a processing stabilizer [particularly, a long-chain (or higher) fatty acid ester (e.g., a C₁₄₋₃₄long-chain (or higher) fatty acid ester), a long-chain (or higher) fatty acid amide (e.g., a C₁₄₋₃₄long-chain (or higher) fatty acid amide), and a polyoxyalkylene glycol], a heat stabilizer (e.g., a salt of an organic carboxylic acid with an alkaline (earth) metal, an alkaline earth metal compound such as an alkaline earth metal oxide or an alkaline earth metal hydroxide, and a phosphine compound). Such a stabilized polyacetal resin is usually employed in the form of a particulate or particle (in particular a pellet) in many cases.

Incidentally, in the case where the polyacetal resin is a copolymer which has contained additive(s) in advance, the amount of additive (each additive) to be added may be, for example, about 0.0001 to 1 part by weight, preferably about 0.001 to 0.8 part by weight, and more preferably about 0.01 to 0.7 part by weight, relative to 100 parts by weight of the polyacetal resin.

The process for producing the polyacetal resin used in the present invention is not particularly limited to a specific one as far as a polyacetal resin having a specific trioxane content (e.g., not more than 100 ppm) as final polymer characteristic indexes can be produced. In general, the polyacetal resin can be produced by selecting the production process and optimizing the producing condition, or combining these production process and condition. The production processes are referred to, for example, US Patent Nos. 2989509, 3174948 and 3318848, Japanese Patent Application Laid-Open Nos. 227916/1984 (JP-59-227916A), 1216/1985 (JP-60-1216A), 60121/1985 (JP-60-60121A), 63216/1985 (JP-60-63216A), 101410/1988 (JP-63-101410A), 170610/1989 (JP-1-170610A), 29427/1990 (JP-2-29427A), 43212/1990 (JP-2-43212A), 65412/1992 (JP-4-65412A), 70267/1995 (JP-7-70267A), 90037/1995 (JP-7-90037A), 73549/1996 (JP-8-73549A), 59332/1997 (JP-9-59332A), 241342/1997 (JP-9-241342A), 101756/1998 (JP-10-101756A), 168144/1998 (JP-10-168144A), 182772/1998 (JP-10-182772A), 60663/1999 (JP-11-60663A), 124422/1999 (JP-11-124422A), 26745/2003 (JP-2003-26745A) and 26746/2003 (JP-2003-26746A), WO94/09055 publication, WO95/02625 publication, WO95/02626 publication, WO95/25761 publication, WO95/27747 publication, WO96/13534 publication, WO03/085016 publication, WO03/085017 publication, and WO03/085018 publication.

In addition to the above-exemplified ordinary production process (or a combination thereof) of the polyacetal resin, it is advantageous to reduce the content of trioxane by a removing process for precisely removing trioxane in the polyacetal resin. That is, the polyacetal resin (particularly, a polyacetal copolymer) used in the present invention may be a polyacetal resin in which the trioxane content is reduced by a solvent treatment (or an elution treatment) or a heat treatment.

The solvent treatment is not particularly limited to a specific one, and for example, there may be exemplified a solvent treatment (or a washing treatment, an elution treatment, or an extraction treatment) with a poor solvent for the polyacetal resin.

In the solvent treatment, a medium (or solvent) to be used may be at least a poor solvent for a polyacetal resin, and usually it is preferred to use a solvent which is a poor solvent for a polyacetal resin (a solvent insoluble to a polyacetal resin) and which is a good solvent for trioxane. Thus, the solvent treatment (the extraction treatment) is usually conducted in a heterogeneous system in many cases.

Such a solvent (a poor solvent) may include water, an alcohol (e.g., an alkyl alcohol such as methanol, ethanol, or propyl alcohol), a ketone (e.g., a dialkyl ketone such as acetone), an ether (e.g. , a dialkyl ether such as diethyl ether), and others. The solvents may be used singly, or may be a mixed medium in which solvents not less than two species are combined. The preferred medium (solvent) may include an aqueous medium (water), a mixed medium of water and an alcohol (an aqueous medium containing an alcohol). Water is particularly preferred.

The medium may be a basic medium (or an alkaline medium) containing a basic substance (or an alkaline substance) in addition to the above-mentioned medium. The basic substance is not particularly limited to a specific one, and may include an amine [for example, an alkylamine such as a monoalkylamine (e.g., methylamine, and tris(hydroxymethyl)aminomethane), a dialkylamine (e.g., dimethylamine, and diethylamine), or a trialkylamine(e.g., triethylamine); or a hydroxyalkylamine such as a monoalkanolamine (e.g., ethanolamine), a dialkanolamine (e.g., diethanolamine), or a trialkanolamine (e.g., triethanolamine)], a hydroxide [e.g., a metal hydroxide (an alkaline metal hydroxide such as sodium hydroxide; an alkaline earth metal hydroxide such as magnesium hydroxide or calcium hydroxide), an ammonium hydroxide (e.g., ammonium hydroxide; a tetraalkylammonium hydroxide such as tetramethylammonium hydroxide (hydroxytetramethylamine), tetraethylammonium hydroxide, tetrabutylammonium hydroxide; a hydroxyalkyltrialkylammonium hydroxide such as choline); and others], a salt of a weak acid [for example, a salt of an organic acid (e.g., an alkanecarboxylic acid such as formic acid or acetic acid) with a basic substance (the above-exemplified basic substances, for example, choline)], and the like. The basic substance may be contained in a medium singly or in combination.

The preferred basic medium may include a basic aqueous medium (water containing a basic substance).

The amount of the medium (or the total amount of the medium and the basic substance) to be used may be selected depending on a species (kind) of the medium, or a medium pH, and may be, for example, about 50 to 30000 parts by weight, preferably about 100 to 10000 parts by weight, and more preferably about 100 to 5000 parts by weight, relative to 100 parts by weight of the polyacetal resin.

The solvent treatment may be conducted either at an ordinary temperature (or a room temperature) or at a heating (warming) temperature. The solvent treatment may be preferably conducted at a heating temperature [e.g., not lower than 80°C (e.g., about 80 to 160°C), and particularly about 90 to 150°C]. Incidentally, during the solvent treatment, heterogeneous system is usually maintained not only at an ordinary temperature but also at a heating (warming) temperature in many cases.

Moreover, as a method for the solvent treatment, any of a continuous system (operation) (e.g. , a counterflow moving bed), a batch system (operation), or a combination of both systems can be selected. Further, by appropriately adjusting (optimizing) the solvent pH, the amount of the solvent to be treated, and the time for solvent treatment, in addition to the solvent species, the amount of the solvent to be used (or supplied), the solvent treatment system (operation), and the temperature during the solvent treatment, the polyacetal resin having a specific trioxane content (e.g., not more than 100 ppm) can be efficiently obtained.

Examples of the heat treatment (system) may include a treatment with a gaseous fluid under heating [e.g., an air flow heat treatment, an inactive (inert) gas (particularly, nitrogen gas) flow heat treatment, and a heated vapor treatment (or super-heated vapor treatment)], a vacuum heat treatment, and others. Moreover, as a heat treatment equipment, there may be exemplified a blower drier (dryer) (e.g., a vertical (upright) airflow drying tumbler, a rotating airflow drier, a band-type airflow drier, and a batch-type airflow drier), and others.

The temperature of the heat treatment (or a temperature of hot-air opening of the heat treatment equipment) may be, for example, not lower than 80°C (e.g., about 80 to 160°C), and usually about 80 to 150°C, preferably about 100 to 145°C, and more preferably a temperature of not lower than the boiling point of trioxane (e.g., about 115 to 145°C). Moreover, the heating time (time for contacting to a heating device) may be about 10 minutes to 20 hours, preferably about 30 minutes to 10 hours, and more preferably about 1 to 8 hours. Further, in addition to the heating temperature or heating time, by appropriately adjusting (optimizing) anairflowamount, apolyacetalresin having a specific trioxane content (e.g., not more than 100 ppm) is efficiently obtainable.

Each of the solvent treatment and the heat treatment may be conducted singly, or in combination. Incidentally, in the case where the solvent treatment is combined with the heat treatment, the order of each treatment is not particularly restricted. For example, the heat treatment may be conducted either after or before the solvent treatment.

In the resin composition, the preferred polyacetal resin is (i) a polyacetal resin (particularly, a polyacetal copolymer) which has a reduced trioxane content by a treatment with an aqueous medium or an aqueous medium containing an alcohol under heating [e.g., not lower than 80°C (e.g., about 80 to 150°C)] or (ii) a polyacetal resin (particularly, a polyacetal copolymer) which has a reduced trioxane content by a treatment with a basic aqueous medium under heating [e.g., not lower than 80°C (e.g., about 80 to 150°C)].

Incidentally, the solvent treatment and/or the heat treatment may be conducted at any stages for preparing the polyacetal resin composition as far as the trioxane content in the polyacetal resin can be reduced. For example, the solvent treatment and/or the heat treatment may be conducted (a) to a polyacetal resin (including a polyacetal resin precedently containing the above additive(s)) as described above, (b) to a polyacetal resin composition (e.g., a pelletized composition) containing a stabilizer or others, or (c) the above (a) and (b) may be conducted in combination.

In the preparation method (embodiment) (b), the solvent treatment and/or the heat treatment is conducted to the polyacetal resin composition to obtain a polyacetal resin composition having a specific trioxane content finally. As an concrete embodiment, there may be mentioned that, for example, a method which comprises melt-mixing a polyacetal resin which may be subjected to the solvent treatment and/or the heat treatment, and a stabilizer (and, if necessary, other additive(s)) by an extruder, extruding the mixture to prepare a resin composition (particularly, a pellet), and subjecting thus obtained resin composition (particularly, a pelletized composition) to the medium treatment and/or the heat treatment; and the like.

Moreover, the polyacetal resin used in the present invention may be a polyacetal resin (usually, a polyacetal copolymer) containing a terminal group such as a terminal hemiformal group, a terminal formyl group, or an unstable terminal group in specific proportions, in addition to containing trioxane in the above-mentioned content (amount). Use of such a polyacetal resin having such terminal groups in specific proportions contributes to the considerable inhibition of formaldehyde generation. Incidentally, in the specification, the term "terminal hemiformal group" means a hydroxymethoxy group (-OCH₂OH located in an end (or a side chain) of a polyacetal copolymer, and is identical with the term "terminal hemiacetal group".

The amount of the terminal hemiformal group can be selected from the range of not more than 2 mmol (e.g., about 0.01 to 1.6 mmol), for example, not more than 1.5 mmol (e.g., about 0.05 to 1.3 mmol), preferably not more than 1. 2 mmol (e.g., about 0.05 to 1.1 mmol), more preferably not more than 1.0 mmol (e.g., about 0.05 to 0.8 mmol), and particularly not more than 0.7 mmol (e.g., about 0.1 to 0.7 mmol), relative to 1 kg of the polyacetal resin (polyacetal copolymer). Incidentally, the amount of the terminal hemiformal group may be usually determined by a ¹H-NMR measurement, and quantitatively determined by using a method described in Japanese Patent Application Laid-Open No. 11143/2001 (JP-2001-11143A), or others.

The amount of the terminal formyl group can be selected from the range of not more than 2 mmol (e.g. , about 0 to 1.6 mmol), for example, not more than 1.5 mmol (e.g., about 0 to 1.3 mmol), preferably not more than 1.2 mmol (e.g., about 0 to 1.1 mmol), and more preferably not more than 1.0 mmol (e.g., about 0 to 0.8 mmol), relative to 1 kg of the polyacetal resin (polyacetal copolymer). Incidentally, the amount of the terminal formyl group (HCO-) may be determined as an amount of a terminal formyloxy group (HCOO-) by a ¹H-NMR measurement as in the case of the terminal hemiformal group, and quantitatively determined simultaneously with that of the terminal hemiformal group by using a method described in Japanese Patent Application Laid-Open No. 11143/2001 (JP-2001-11143A), or others.

The proportion (molar ratio) of the terminal hemiacetal group relative to the terminal formyl group (that is, the proportion of the amount of the terminal hemiacetal group relative to that of the terminal formyl group) [the former/the latter] is about 100/0 to 5/95, preferably about 100/0 to 10/90, more preferably about 90/10 to 15/85 and particularly about 85/15 to 15/85, in many cases.

The amount of the unstable terminal group can be selected from a range of not more than 1.0% by weight (e.g., about 0.01 to 0.9% by weight), and may be, for example, not more than 0.8% by weight (e.g., about 0.01 to 0.6% by weight), preferably not more than 0.5% by weight (e.g., about 0.01 to 0.4% by weight), more preferably not more than 0.4% by weight (e.g., about 0.01 to 0.3% by weight), and particularly not more than 0.25% by weight (e.g., about 0.01 to 0.25% by weight), relative to the total amount of the polyacetal resin (polyacetal copolymer). Incidentally, the amount of the unstable terminal group is an index regarding polymer quality, and represented as the percentage (% by weight) relative to the polyacetal copolymer based on the following manner: putting 1 g of the polyacetal copolymer and 100 ml of 50% (by volume) methanol aqueous solution containing 0.5% (by volume) of ammonium hydroxide in a pressure tight and airtight container, heat-treating the mixture solution at 180°C for 45 minutes, then cooling and opening the container, and quantitatively determining the amount of formaldehyde dissolved and eluted by decomposition in the resulting solution.

Incidentally, a polyacetal resin (polyacetal copolymer) having such a terminal group(s) may be, for example, produced by reducing impurities (e.g., water, methanol, and formic acid) in a polymerizable component (a monomer constituting an oxymethylene group, and a copolymerizable component), particularly, reducing the water content in the polymerizable component to not more than 20 ppm and particularly not more than 10 ppm, and selecting the production process and optimizing the producing condition, or combining these production processes.

### [Stabilizer]

In the present invention, by using a polyacetal resin having a low trioxane content and by combining the polyacetal resin having such a specific trioxane concentration (amount) with a specific stabilizer, the amount of trioxane elution and the emission (amount) of a volatile organic compound including trioxane from a polyacetal resin composition (and a molded product thereof) can be reduced to an extremely low level by a synergic effect. Moreover, in the present invention, use of a polyacetal resin having an extremely low trioxane content (which can be a potential release source of formaldehyde) realizes inhibition of formaldehyde generation (emission). In particular, in the case where the stabilizer comprises at least a formaldehyde emission inhibitor, in addition to the trioxane elusion and the generation of a volatile organic compound including trioxane, the generation of formaldehyde from the polyacetal resin composition (and a molded product thereof) can be inhibited. Therefore, it is preferred that the stabilizer comprises at least a formaldehyde emission inhibitor.

The stabilizer comprises at least one member selected from the group consisting of an antioxidant, a formaldehyde emission inhibitor, a processing stabilizer, and a heat stabilizer.

### (Antioxidant)

The antioxidant may include a hindered phenol compound, a hindered amine compound, an amine-series antioxidant [e.g., phenylnaphthylamine, N,N'-diphenyl-1,4-phenylenediamine, and 4,4'-di(α,α-dimethylbenzyl)diphenylamine], a phosphorus-containing antioxidant [e.g., a phosphite compound such as triphenyl phosphite, a triphenyl phosphate compound such as tris(2,4-di-t-butylphenyl) phosphate, a diphosphonite compound, and a metal salt of hypophosphorous acid (phosphinic acid)], a sulfur-containing antioxidant (e.g., dilaurylthiodipropionate), a hydroquinone-series antioxidant (e.g., 2,5-di-t-butylhydroquinone), a quinoline-series antioxidant (e.g., 6-ethoxy-2,2,4-trimethyl-1,2-dihydroquinoline), and others. The antioxidants may be used singly or in combination. Incidentally, the hindered amine compound also has a function as a weather-resistant stabilizer depending on the kind or species, as mentioned below. Among these antioxidants, the hindered phenol compound, and the hindered amine compound are preferred. The antioxidant usually comprises the hindered phenol compound in many cases.

### (Hindered phenol compound)

The hindered phenol compound may include a conventional phenol-series antioxidant, for example, a monocyclic hindered phenolic compound (e.g., 2,6-di-t-butyl-p-cresol), a polycyclic hindered phenolic compound in which rings are connected or bonded to each other through a hydrocarbon group or a group containing a sulfur atom [e.g., a C₁₋₁₀alkylene-bis to tetrakis(t-butylphenol) such as 2,2'-methylene bis(4-methyl-6-t-butylphenol), 4,4'-methylene bis(2,6-di-t-butylphenol) or 1,1,3-tris(2-methyl-4-hydroxy-5-t-butylphenyl)butane; a C₂₋₁₀alkenylene or dienylene-bis to tetrakis(t-butylphenol) such as 4,4'-butylidene bis(3-methyl-6-t-butylphenol); a C₆₋₂₀arylene or aralkylene-bis to tetrakis(t-butylphenol) such as 1,3,5-trimethyl-2,4,6-tris(3,5-di-t-butyl-4-hydroxybenzyl)benzene; and a bis(t-butylphenol) compound in which t-butylphenol groups are connected or bonded to each other through a group having a sulfur atom, for example, 4,4'-thiobis(3-methyl-6-t-butylphenol)], a hindered phenolic compound having an ester group or an amide group [e.g., a t-butylphenol compound having a C₂₋₁₀alkylenecarbonyloxy group, exemplified by n-octadecyl-3-(4'-hydroxy-3',5'-di-t-butylphenyl) propionate and n-octadecyl-2-(4'-hydroxy-3',5'-di-t-butylphenyl) propionate; a bis to tetrakis(t-butylphenol) compound in which t-butylphenol groups are connected or bonded to each other through a polyol ester of a fatty acid, exemplified by 1,6-hexanediol-bis[3-(3,5-di-t-butyl-4-hydroxyphenyl) propionate], triethylene glycol-bis[3-(3-t-butyl-5-methyl-4-hydroxyphenyl) propionate] and pentaerythritol tetrakis[3-(3,5-di-t-butyl-4-hydroxyphenyl)propionate] ; a bis to tetrakis(t-butylphenol) having a heterocyclic group and a C₂₋₁₀alkylenecarbonyloxy group, exemplified by 3,9-bis[2-{3-(3-t-butyl-4-hydroxy-5-methylphenyl) propionyloxy}-1,1-dimethylethyl]-2,4,8,10-tetraoxaspiro[5.5]undecane; a t-alkylphenol (e.g., t-butylphenol, and t-pentylphenol) compound having a C₃₋₁₀alkenylcarbonyloxy group, exemplified by 2-t-butyl-6-(3'-t-butyl-5'-methyl-2'-hydroxybenzyl)-4-methylphenylacrylate and 2-[1-(2-hydroxy-3,5-di-t-pentylphenyl)ethyl]-4,6-di-t-pentylphenylacrylate; a hindered phenolic compound having a phosphonic ester group, exemplified by di-n-octadecyl-3,5-di-t-butyl-4-hydroxybenzylphosphona te; a hindered phenolic compound having an amide unit, exemplified by N,N'-hexamethylene bis(3,5-di-t-butyl-4-hydroxy-dihydrocinnamamide), N,N'-ethylene bis[3-(3,5-di-t-butyl-4-hydroxyphenyl)propionamide], N,N'-tetramethylene bis[3-(3,5-di-t-butyl-4-hydroxyphenyl)propionamide], N,N'-hexamethylene bis[3-(3,5-di-t-butyl-4-hydroxyphenyl)propionamide], N,N'-ethylene bis[3-(3-t-butyl-5-methyl-4-hydroxyphenyl)propionamide], N,N'-hexamethylene bis[3-(3-t-butyl-5-methyl-4-hydroxyphenyl)propionamide N,N'-bis[3-(3,5-di-t-butyl-4-hydroxyphenyl)propionyl]h ydrazine, N,N'-bis[3-(3-t-butyl-5-methyl-4-hydroxyphenyl)propion yl]hydrazine, 1,3,5-tris(3,5-di-t-butyl-4-hydroxybenzyl)isocyanurate, and 1,3,5-tris(4-t-butyl-3-hydroxy-2,6-dimethylbenzyl)isoc yanurate]; and others. Among these compounds, a phenolic compound having a t-butyl group (particularly, a plurality of t-butyl groups), in particular, a compound having a plurality of t-butylphenol sites, is preferred. The hindered phenol compounds may be used singly or in combination.

### (Hindered amine compound)

The hindered amine compound may include a piperidine derivative having a steric hindrance group, for example, an ester group-containing piperidine derivative [for example, an aliphatic acyloxypiperidine (e.g., a C₂₋₂₀aliphatic acyloxy-tetramethylpiperidine) such as 4-acetoxy-2,2,6,6-tetramethylpiperidine, 4-stearoyloxy-2,2,6,6-tetramethylpiperidine or 4-acryloyloxy-2,2,6,6-tetramethylpiperidine; an aromatic acyloxypiperidine (e.g., a C₇₋₁₁aromatic acyloxytetramethylpiperidine) such as 4-benzoyloxy-2,2,6,6-tetramethylpiperidine; an aliphatic di-or tricarboxylic acid-bis-or trispiperidyl ester(e.g., a C₂₋₂₀aliphatic dicarboxylic acid-bispiperidyl ester) such as bis(2,2,6,6-tetramethyl-4-piperidyl)oxalate, bis(2,2,6,6,-tetramethyl-4-piperidyl)malonate, bis(2,2,6,6-tetramethyl-4-piperidyl)adipate, bis(1,2,2,6,6-pentamethyl-4-piperidyl)adipate, bis(2,2,6,6-tetramethyl-4-piperidyl)sebacate or bis(1,2,2,6,6-pentamethyl-4-piperidyl)sebacate; an aromatic di- to tetracarboxylic acid-bis- to tetrakispiperidyl ester (e.g., an aromatic di- or tricarboxylic acid-bis- or trispiperidyl ester) such as bis(2,2,6,6-tetramethyl-4-piperidyl)terephthalate or tris(2,2,6,6-tetramethyl-4-piperidyl)benzene-1,3,5-tri carboxylate], an ether group-containing piperidine derivative [for example, a C₁₋₁₀alkoxypiperidine (e.g., a C₁₋₆alkoxy-tetramethylpiperidine) such as 4-methoxy-2,2,6,6-tetramethylpiperidine; a C₅₋₈cycloalkyloxy-piperidine such as 4-cyclohexyloxy-2,2,6,6-tetramethylpiperidine; a C₆₋₁₀aryloxypiperidine such as 4-phenoxy-2,2,6,6-tetramethylpiperidine; a C₆₋₁₀aryl-C₁₋₄alkyloxy-piperidine such as 4-benzyloxy-2,2,6,6-tetramethylpiperidine; or an alkylenedioxybispiperidine (e.g., a C₁₋₁₀alkylenedioxy-bispiperidine) such as 1,2-bis(2,2,6,6-tetramethyl-4-piperidyloxy)ethane], an amide group-containing piperidine derivative [for example, a carbamoyloxypiperidine such as 4-(phenylcarbamoyloxy)-2,2,6,6-tetramethylpiperidine; an alkylenedioxy-bis piperidine substituted with a carbamoyloxy group, e.g., bis(2,2,6,6-tetramethyl-4-piperidyl)hexamethylene-1,6-dicarbamate]. Moreover, the hindered amine compound may also include, for example, a polycondensate of piperidine derivatives having a high molecular weight [e.g., a polycondensate of dimethyl succinate and 1-(2-hydroxyethyl)-4-hydroxy-2,2,6,6-tetramethylpiperi dine, and a poly{6-[(1,1,3,3-tetramethylbutyl)imino-1,3,5-triazin-2,4-diyl][2-(2,2,6,6-tetramethylpiperidyl)amino]hexame thylene[4-(2,2,6,6-tetramethylpiperidyl)imino]}]. These hindered amine compounds may be used singly or in combination.

### (Formaldehyde emission inhibitor)

Examples of the formaldehyde emission inhibitor may include an active hydrogen-containing compound such as (a) a basic nitrogen-containing compound, (b) an active methylene compound, or (c) a polyphenol compound. These formaldehyde emission inhibitors may be used singly or in combination.

### (a) Basic nitrogen-containing compound

The basic nitrogen-containing compound may include, for example, an aminotriazine compound, a guanidine compound, a urea compound, a hydrazine compound, an amino acid compound, an amino alcohol com pound, an imide compound, an imidazole compound, and an amide compound.

The aminotriazine compound may include, for example, a melamine compound {e.g., melamine, a condensate of melamine (melam, melem, melon), a bis melamine compound (e.g., compounds described in WO00/17171 publication and Japanese Patent Application Laid-Open No. 271346/1986 (JP-61-271346A), a melamine resin (a melamine-formaldehyde resin), an N-hydroxyarylalkylmelamine compound [e.g., N,N',N"-mono to hexakis(o-, m- and/or p-hydroxyphenylmethyl)melamine]}, and a guanamine compound.

Examples of the guanamine compound may include an aliphatic guanamine compound [for example, a monoguanamine (e.g.,valeroguanamine,caproguanamine,heptanoguanamine, capryloguanamine, and stearoguanamine), an alkylenebisguanamine (e.g., succinoguanamine, glutaroguanamine, adipoguanamine, pimeloguanamine, suberoguanamine, azeloguanamine, and sebacoguanamine)], an alicyclic guanamine compound [for example, a monoguanamine compound (e.g., cyclohexanecarboguanamine, norbornenecarboguanamine, cyclohexenecarboguanamine, norbornanecarboguanamine, and a compound obtained by introducing a functional group thereto (e.g., a derivative in which a cycloalkane residue has one to three functional group(s) as a substituent, such as an alkyl group, a hydroxy group, an amino group, an acetoamino group, a nitryl group, a carboxy group, an alkoxycarbonyl group, a carbamoyl group, an alkoxy group, a phenyl group, a cumyl group, or a hydroxyphenyl group)], an aromatic guanamine compound [for example, a monoguanamine (benzoguanamine and a compound obtained by introducing a functional group thereto (e.g., a benzoguanamine derivative whose phenyl residue has one to five functional group(s) as a substituent, such as an alkyl group, a hydroxy group, an amino group, an acetoamino group, a nitryl group, a carboxy group, an alkoxycarbonyl group, a carbamoyl group, an alkoxy group, a phenyl group, a cumyl group or a hydroxyphenyl group: for example, o-, m- or p-toluguanamine, o-, m- or p-xyloguanamine, o-, m- or p-phenylbenzoguanamine, o-, m- or p-hydroxybenzoguanamine, 4-(4'-hydroxyphenyl)benzoguanamine, o-, m- or p-nitrylbenzoguanamine, 3,5-dimethyl-4-hydroxybenzoguanamine, and 3,5-di-t-butyl-4-hydroxybenzoguanamine), α- or β-naphthoguanamine and a derivative obtained by introducing a functional group thereto, a polyguanamine (e.g., phthaloguanamine, isophthaloguanamine, terephthaloguanamine, naphthalenediguanamine, and biphenylenediguanamine), and an aralkyl- or aralkyleneguanamine (e.g., phenylacetoguanamine, β-phenylpropioguanamine, and o-, m- or p-xylylenebisguanamine))], a hetero atom-containing guanamine compound [for example, an acetal group-containing guanamine (e.g., 2,4-diamino-6-(3,3-dimethoxypropyl-s-triazine), a dioxane ring-containing guanamine {e.g., [2-(4',6'-diamino-s-triazin-2'-yl)ethyl]-1,3-dioxane, [2-(4',6'-diamino-s-triazin-2'-yl)ethyl]-4-ethyl-4-hyd roxymethyl-1,3-dioxane}, a tetraoxospiro ring-containing guanamine (e.g., CTU-guanamine, and CMTU-guanamine), an isocyanuric ring-containing guanamine (e.g., 1,3,5-tris[2-(4',6'-diamino-s-triazin-2'-yl)ethyl]isoc yanurate, and 1,3,5-tris[3-(4',6'-diamino-s-triazin-2'-yl)propyl]iso cyanurate), an imidazoyl ring-containing guanamine (e.g., guanamine compounds described in Japanese Patent Application Laid-Open Nos. 179671/1994(JP-6-179671A), and 10871/1995 (JP-7-10871A)), an imidazole ring-containing guanamine (e.g., guanamine compounds described in Japanese Patent Application Laid-Open Nos. 41120/1972 (JP-47-41120A), 284675/1991 (JP-3-284675A), and 33766/1995 (JP-7-33766A)), and guanamine compounds described in Japanese Patent Application Laid-Open No. 154181/2000 (JP-2000-154181A)). Moreover, the guanamine compound also may include, for example, a compound (e.g., the melamine, melamine derivative and guanamine compound) having an amino group substituted by an alkoxymethyl group [e.g., a mono- to hexamethoxymethylmelamine, a mono- to tetramethoxymethylbenzoguanamine, and a mono- to octamethoxymethyl-CTU-guanamine].

The guanidine compound may include cyanoguanidine, a creatinine compound (e.g., creatinine), and others.

Examples of the urea compound may include a linear (or chain) urea compound [for example, a biurea compound (e.g., biurea), biuret, a condensate of urea with formaldehyde (ureaform), a polyalkylene urea or aryleneurea (e.g., a polynonamethyleneurea)], a cyclic urea compound [for example, a hydantoin compound (hydantoin, 5-methylhydantoin, 5-ethylhydantoin, 5-isopropylhydantoin, 5-phenylhydantoin, 5-benzylhydantoin, 5,5-dimethylhydantoin, 5,5-pentamethylenehydantoin, 5-methyl-5-phenylhydantoin, 5,5-diphenylhydantoin, 5-(o-, m- or p-hydroxyphenyl)hydantoin, 5-(o-, m- or p-aminophenyl)hydantoin, allantoin, 5-methylallantoin, a metal salt of allantoin (e.g., an Al salt: allantoin dihydroxyalminum salt),crotylidene diurea,acetylene urea, a mono- to tetraalkoxy methylglycoluril (e.g., a mono- to tetramethoxy methylglycoluril), uric acid, and urazole].

Examples of the hydrazine compound may include hydrazine and a hydrazine derivative (e.g., hydrazone, a carboxylic acid hydrazide), and preferably include a carboxylic acid hydrazide compound. For example, such a compound may include an aliphatic carboxylic acid hydrazide compound [for example, a monocarboxylic acid hydraz ide (e.g., lauric acid hydrazide, stearic acid hydrazide, 12-hydroxystearic acid hydrazide, and 1,2,3,4-butanetetracarboxylic acid hydrazide), and a polycarboxylic acid hydrazide (e.g., succinic acid mono- or dihydrazide, glutaric acid mono- or dihydrazide, adipic acid mono- or dihydrazide, pimelic acidmono- or dihydrazide, suberic acid mono- or dihydrazide, azelaic acid mono- or dihydrazide, sebacic acid mono- or dihydrazide, mono- or dihydrazide of dodecanedioic acid, mono- or dihydrazide of hexadecanedioic acid, mono- or dihydrazide of eicosanedioic acid, and 7,11-octadecadiene-1,18-dicarbohydrazide)], an alicyclic carboxylic acid hydrazide compound [for example, a monocarboxylic acid hydrazide (e.g., a cyclohexanecarboxylic acid hydrazide), and a polycarboxylic acid hydrazide (e.g., dimeric acid mono- or dihydrazide, trimeric acid mono- to trihydrazide, a 1,2-, 1,3- or 1,4-cyclohexanedicarboxylic acid mono- or dihydrazide, and a cyclohexanetricarboxylic acid mono- to trihydrazide)], an aromatic carboxylic acid hydrazide compound [for example, a monocarboxylic acid hydrazide (e.g., benzoic acid hydrazide and a compound obtained by introducing a functional group thereto (e.g., a benzoguanamine derivative whose phenyl residue has one to five functional group(s) as a substituent, such as an alkyl group, a hydroxy group, an acetoxy group, an amino group, an acetoamino group, a nitryl group, a carboxy group, an alkoxycarbonyl group, a carbamoyl group, an alkoxy group, a phenyl group, a benzyl group, a cumyl group, or a hydroxyphenyl group: e.g. , o-, m- or p-methylbenzoic acid hydrazide, 2,4-, 3,4-, 3,5- or 2,5-dimethylbenzoic acid hydrazide, o-, m- or p-hydroxybenzoic acid hydrazide, o-, m- or p-acetoxybenzoic acid hydrazide, 4-hydroxy-3-phenylbenzoic acid hydrazide, 4-acetoxy-3-phenylbenzoic acid hydrazide, 4-phenylbenzoic acid hydrazide, 4-(4'-phenyl) benzoic acid hydrazide, 4-hydroxy-3,5-dimethylbenzoic acid hydrazide, and 4-hydroxy-3,5-di-t-butylbenzoic acid hydrazide), α- or β-naphthoic acid hydrazide, and a compound obtained by introducing a functional group thereto (e.g., 3-hydroxy-2-naphthoic acid hydrazide, and 6-hydroxy-2-naphthoic acid hydrazide), and a polycarboxylic acid hydrazide (e.g., isophthalic acid mono- or dihydrazide, terephthalic acid mono- or dihydrazide, 1,4- or 2,6-naphthalenedicarboxylic acid mono- or dihydrazide, 3,3'-, 3,4'- or 4,4'-diphenyldicarboxylic acid mono- or dihydrazide, diphenyl ether dicarboxylic acid mono- or dihydrazide, diphenylmethanedicarboxylic acid mono- or dihydrazide, diphenylethanedicarboxylic acid mono- or dihydrazide, diphenoxyethanedicarboxylic acid mono- or dihydrazide, diphenyl sulfone dicarboxylic acid mono- or dihydrazide, diphenyl ketone dicarboxylic acid mono- or dihydrazide, 4,4''-terphenyldicarboxylic acid mono- or dihydrazide, 4,4'''-quarterphenyldicarboxylic acid mono- or dihydrazide, 1,2,4-benzenetricarboxylicacid mono- to trihydrazide, pyromellitic acid mono- to tetrahydrazide, and 1,4,5,8-naphthoic acid mono- to tetrahydrazide))], a hetero atom-containing carboxylic acid hydrazide compound [for example, a dioxane ring-containing carboxylic acid hydrazide (e.g., mono- or dihydrazide of 5-methylol-5-ethyl-2-(1,1-dimethyl-2-carboxyethyl)-1,3 -dioxane), a tetraoxospiro ring-containing carboxylic acid hydrazide (e.g., mono- or dihydrazide of 3,9-bis(2-carboxyethyl)-2,4,8,10-tetraoxaspiro[5.5]und ecane, mono- or dihydrazide of 3,9-bis(2-methoxycarbonylethyl)-2,4,8,10-tetraoxaspiro [5.5]undecane, mono- or dihydrazide of 3,9-bis(1,1-dimethyl-1-carboxymethyl)-2,4,8,10-tetraox aspiro[5.5]undecane, and mono- or dihydrazide of 3,9-bis(1,1-dimethyl-1-methoxycarbonylmethyl)-2,4,8,10 -tetraoxaspiro[5.5]undecane), an isocyanuric ring-containing carboxylic acid hydrazide (e.g., mono- to trihydrazide of 1,3,5-tris[2-carboxyethyl]isocyanurate, mono- to trihydrazide of 1,3,5-tris(3-carboxypropyl)isocyanurate), a hydantoin ring-containing carboxylic acid hydrazide (e.g., 1,3-bis(2-hydrazinocarbonylethyl)-5-isopropylhydantoin ), and carboxylic acid hydrazides described in US Patent Nos. 4465830 and 4544733, and Japanese Patent Application Laid-Open Nos. 193753/1991 (JP-3-193753A), 131953/1983 (JP-58-131953A), 24714/1984 (JP-59-24714A), 67256/1984 JP-59-67256A, 178851/1985 (JP-60-178851A), and 183316/1986 (JP-61-183316A)], a polymeric carboxylic acid hydrazide compound [for example, a homo- or copolymer of a poly (meth) acrylic acid hydrazide which may be crosslinked (e.g., an olefinic copolymer, a copolymer with a vinyl monomer, a copolymer with styrenic monomer, a crosslinked compound with divinylbenzene, and a crosslinked compound with bis(meth)acrylate): polymers described in Japanese Patent Application Laid-Open Nos. 142496/1978 (JP-53-142496A), 21493/1979 (JP-54-21493A), 43254/1979 (JP-54-43254A), 145529/1980 (JP-55-145529A), 2306/1981 (JP-56-2306A), 105905/1981 (JP-56-105905A), 69232/1983 (JP-58-69232A), and 49300/1988 (JP-63-49300A), a commercial item "Aminopolyacrylamide APA" manufactured by Otsuka Chemical Co., Ltd., and copolymers described in US Patent No. 3574786].

The amino acid compound may include an amino acid. As the amino acid, there may be exemplified an α-amino acid, a β-amino acid, a γ-amino acid, a δ-amino acid, and the like. Examples of the α-amino acid may include a monoaminomonocarboxylic acid (e.g., glycine, alanine, valine, norvaline, leucine, norleucine, isoleucine, phenylalanine, tyrosine, diiodotyrosine, surinamine, threonine, serine, proline, hydroxyproline, tryptophan, methionine, cystine, cysteine, citrulline, α-aminobutyric acid, hexahydropicolinic acid, teanine, o-tyrosine, m-tyrosine, and 3,4-dihydroxyphenylalanine), a monoaminodicarboxylic acid (e.g., aspartic acid, glutamic acid, asparagine, glutamine, hexahydrodipicolinic acid, and hexahydroquinolinic acid), a diaminomonocarboxylic acid(e.g., lysine, hydroxylysine, arginine, and histidine), and others. As the β-amino acid, γ-amino acid, and δ-amino acid, there may be exemplified β-alanine, β-aminobutyric acid, hexahydroxycinchomeronic acid, γ-aminobutyric acid, δ-amino-n-valeric acid, and others. These amino acids may be a D-, L-, or DL-form. The amino acid may also include an amino acid derivative in which a carboxyl group is subjected to metal salination (e.g., an alkali metal salt, an alkaline earth metal salt), amidation, hydrazidation, or esterification (e.g., methyl esterification, ethyl esterification).

The amino alcohol compound may include, for example, monoethanolamine, diethanolamine, 2-amino-1-butanol, 2-amino-2-methyl-1-propanol, 2-amino-2-methyl-1,3-propanediol, 2-amino-2-ethyl-1,3-propanediol, tris(hydroxymethyl)aminomethane, and others.

Examples of the imide compound may include phthalic acid imide, trimellitic acid imide, and pyromellitic acid imide.

The imidazole compound may include an alkylimidazole (e.g., 2-undecylimidazole, and 2-heptadecylimidazole), an arylimidazole (e.g., 2-phenylimidazole, and 2-phenyl-4-methylimidazole), a bisimidazole (e.g., 2,2'-bisimidazole), an alkylenebisimidazole [e.g., tetramethylene-1,4-bis(2-imidazole)], an arylenebisimidazole [e.g., 1,3-phenylene-bis(2-imidazole), and 1,4-phenylene-bis(2-imidazole)], a urea derivative of imidazole [e.g., N-[2-(2-methyl-1-imidazolyl)ethyl]urea, and N,N'-bis(2-methyl-l-imidazolylethyl)urea], and others.

The amide compound may include, for example, an aliphatic carboxylic acid amide (e.g., malonamide, adipic acid amide, sebacic acid amide, and dodecanedioic acid amide), a cyclic carboxylic acid amide (e.g., ε-caprolactam), an aromatic carboxylic acid amide (e.g., benzoic acid amide, o-, m- or p-aminobenzamide, isophthalic acid diamide, and terephthalic acid amide), a polyamide compound [for example, a polyamide-series resin such as a nylon 3 (a poly-β-alanine), a nylon 46, a nylon 6, a nylon 66, a nylon 11, a nylon 12, a nylon MXD6, a nylon 6-10, a nylon 6-11, a nylon 6-12, a nylon 6-66-610, or a nylon 9T], a polyester amide, a polyamide imide, a polyurethane, a poly(meth)acrylic acid amide-series resin [e.g., a homo- or copolymer of a poly(meth)acrylic amide which may be crosslinked, such as polymers described in US Patent No. 5011890], a homo- or copolymer of a poly(vinyllactam) [for example, a homo- or copolymer of a poly(N-vinylpyrrolidone) (e.g., homo- or copolymers described in Japanese Patent Application Laid-Open No. 52338/1980 (JP-55-52338A), and US Patent No. 3204014)], a poly(N-vinylcarboxylic acid amide), a copolymer of N-vinylcarboxylic acid amide and another vinyl monomer (e.g., homo- or copolymers described in Japanese Patent Application Laid Open Nos. 247745/2001 (JP-2001-247745A), 131386/2001 (JP-2001-131386A), 311302/1996 (JP-8-311302A) and 86614/1984 (JP-59-86614A), US Patent Nos. 5455042, 5407996 and 5338815), and others.

### (b) Active methylene compound

Examples of the active methylene compound may include a β-diketone compound [for example, a β-keto acid [an ester derivative or metal salt of a (cyclo)alkylcarbonylacetic acid, an arylcarbonylacetic acid and an aralkylcarbonylacetic acid (e.g., an ester derivative of a polyhydric alcohol: e.g., an acetoacetic acid ester derivative or benzoylacetic acid ester derivative of a polyvinyl alcohol homo- or copolymer, and acetoacetic acid group-containing saturated polyester-series resins described in Japanese Patent Application Laid-Open No. 114041/1999 (JP-11-114041A))], an acetylacetone compound (acetylacetone, dimethyl 1,3-acetonedicarboxylate, 1,3-acetonedicarboxylic acid diamide, a poly(1,3-acetonedicarboxylate), cyclohexane-1,3-dione, and dimedone], and others.

### (c) Polyphenol compound

The polyphenol compound may include, for example, a novolak phenol resin, a phenol-aralkyl resin, a modified phenol resin (e.g., a phenol-melamine resin, and a phenol-aralkyl-melamine resin), a polyvinylphenol homopolymer or copolymer, a tannin, acatechin, and a lignin.

Incidentally, the formaldehyde emission inhibitor (e.g., a hydrazine compound, and an amino acid compound) may be carried on (or supported with) a layered material, a porous material (e.g., a hydrotalcite, a montmorillonite, a silica gel, an alumina, a titania, a zirconia, a sepiolite, a smectite, a palygorskite, an imogolite, a zeolite, and an activated carbon), or may form a inclusion or clathrate compound with a host (e.g., α-, β-, γ-, or δ-cyclodextrin).

The formaldehyde emission inhibitors may be used singly or in combination.

Among these formaldehyde emission inhibitors, the basic nitrogen-containing compound is preferred. In particular, the aminotriazine compound (particularly, the guanamine compound such as the aromatic guanamine compound or the hetero atom-containing guanamine compound), the urea compound (particularly, the linear (or chain) urea compound, and the cyclic urea compound), the hydrazine compound (particularly, the organic carboxylic acid hydrazide compound such as the aliphatic carboxylic acid hydrazide compound, the alicyclic carboxylic acid hydrazide compound, the aromatic carboxylic acid hydrazide compound, the hetero atom-containing carboxylic acid hydrazide compound or the polymeric carboxylic acid hydrazide compound), the amide compound (particularly, the amide-series resin such as the polyamide-series resin or the poly(meth)acrylic acid amide-series resin) is preferably used.

### (Processing stabilizer)

Examples of the processing stabilizer may include a long-chain or higher fatty acid or a derivative thereof, a polyoxyalkylene glycol, a silicone compound, a fluorine-containing compound (e.g., a fluorine-containing oligomer or a fluorine-containing resin, such as a polytetrafluoroethylene, a polychlorotrifluoroethylene, a polyvinylidene fluoride, a tetrafluoroethylene-hexafluoropropylene copolymer, or a tetrafluoroethylene-perfluoroalkyl vinyl ether copolymer), a wax [e.g., a polyolefinic wax (such as a polyethylene wax), an olefin copolymer wax (such as an ethylene copolymer wax), and a partially oxidized substance or mixture of such wax).

The preferred processing stabilizer includes (a) the long-chain or higher fatty acid or a derivative thereof, (b) the polyoxyalkylene glycol, and (c) the silicone compound. The processing stabilizer usually comprises at least one member selected from these compounds in many cases.

(a) Long-chain or higher fatty acid or derivative thereof The long-chain or higher fatty acid may be a saturated fatty acid or an unsaturated fatty acid. Moreover, part of hydrogen atoms in the higher fatty acid may be substituted with a substituent(s) such as hydroxyl group. Such a higher fatty acid may be exemplified by a mono- or di-fatty acid having not less than 10 carbon atoms, for example, a saturated mono-fatty acid having not less than 10 carbon atoms [e.g., a saturated C₁₀₋₃₄ fatty acid (preferably a saturated C₁₀₋₃₀ fatty acid) such as capric acid, lauric acid, myristic acid, pentadecylic acid, palmitic acid, stearic acid, arachic acid, behenic acid or montanic acid], an unsaturated mono-fatty acid having not less than 10 carbon atoms [e.g. , an unsaturated C₁₀₋₃₄ fatty acid (preferably an unsaturated C₁₀₋₃₀ fatty acid) such as oleic acid, linoleic acid, linolenic acid, arachidonic acid or erucic acid], a di-fatty acid having not less than 10 carbon atoms (a dibasic fatty acid) [e.g. , a saturated C₁₀₋₃₀di-fatty acid (preferably a saturated C₁₀₋₂₀di-fatty acid) such as sebacic acid, dodecanoic acid, tetradecanoic acid or thapsiaic acid (or thapsic acid), and an unsaturated C₁₀₋₃₀di-fatty acid (preferably an unsaturated C₁₀₋₂₀di-fatty acid) such as decenedioic acid or dodecenedioic acid], and others. These fatty acids may be used singly or in combination. The fatty acid may also include one which has one or a plurality of hydroxyl group (s) in the molecular (e.g., a hydroxy-saturated C₁₀₋₂₆ fatty acid such as 12-hydroxystearic acid).

The derivative of the higher fatty acid may include, for example, a fatty acid ester, a fatty acid amide, and others. As to the higher fatty acid ester, there is no particular limitation on its structure, and an ester of either a straight or branched chain fatty acid can be used. As the higher fatty acid ester, there may be mentioned, for example, an ester of the above-mentioned higher fatty acid with an alcohol (e. g. , an ester having one or a plurality of ester bond(s), such as a monoester, a diester, a triester, or tetraester). There is no particular limitation on a species of the alcohol constituting the higher fatty acid ester. The polyhydric alcohol may include a polyhydric alcohol having about 2 to 8 carbon atoms (preferably, about 2 to 6 carbon atoms) or a polymer thereof, for example, a diol exemplified by an alkylene glycol [e.g., a C₂₋₈alkylene glycol (preferably a C₂₋₆ alkylene glycol) such as ethylene glycol, diethylene glycol or propylene glycol]; a triol exemplified by glycerin, trimethylolpropane, or a derivative thereof; a tetraol exemplified by pentaerythritol, sorbitan, or a derivative thereof; as well as a homo- or copolymer of the polyhydric alcohol (s) [e.g., a homo- or copolymer of a polyoxyalkylene glycol such as a polyethylene glycol or a polypropylene glycol, a polyglycerin, and dipentaerythritol, a polypentaerythritol]. The average of polymerization degree of the polyalkylene glycol is not less than 2 (e.g., about 2 to 500), preferably about 2 to 400 (e.g., about 2 to 300), and the preferred average of polymerization degree is not less than 16 (e.g., about 20 to 200). Such a polyoxyalkylene glycol is preferably used on esterification with a fatty acid having not less than 12 carbon atoms. The preferred polyhydric alcohol is a polyalkylene glycol having the average of polymerization degree of not less than 2. These polyhydric alcohols may be used singly or in combination.

Examples of such an ester of a long-chain or higher fatty acid may include a C₁₄₋₃₄long-chain fatty acid ester, e.g. , ethylene glycolmono- or dipalmitate, ethylene glycol mono- or distearate, ethylene glycol mono- or dibehenate, ethylene glycol mono- or dimontanate, glycerin mono- to tripalmitate, glycerin mono-to tristearate, glycerin mono-to tribehenate, glycerin mono- to trimontanate, pentaerythritol mono- to tetrapalmitate, pentaerythritol mono- to tetrastearate, pentaerythritol mono- to tetrabehenate, pentaerythritol mono- to tetramontanate, a polyglycerin tristearate, trimethylolpropane monopalmitate, pentaerythritol monoundecylate, sorbitan monostearate, a monolaurate of a polyalkylene glycol (such as a polyethylene glycol or a polypropylene glycol), a monopalmitate of the polyalkylene glycol, a monostearate of the polyalkylene glycol, a monobehenate of the polyalkylene glycol, a monomontanate of the polyalkylene glycol, a dilaurate of the polyalkylene glycol, a dipalmitate of the polyalkylene glycol, a distearate of the polyalkylene glycol, a dibehenate of the polyalkylene glycol, a dimontanate of the polyalkylene glycol, a dioleate of the polyalkylene glycol, and a dilinolate of the polyalkylene glycol.

The fatty acid amide may include, for example, an acid amide (e.g., monoamide, and bisamide) of the higher fatty acid (a higher mono- or di-fatty acid) with an amine (such as a monoamine, a diamine or a polyamine). As the monoamide, there may be mentioned, for example, a primary acid amide of a saturated fatty acid (such as capric acid amide, lauric acid amide, myristic acid amide, palmitic acid amide, stearic acid amide, arachic acid amide, behenic acid amide or montanic acid amide); a primary acid amide of an unsaturated fatty acid (such as oleic acid amide); and a secondary acid amide of a saturated and/or an unsaturated fatty acid with a monoamine (such as stearyl stearic acid amide or stearyl oleic acid amide). The preferred fatty acid amide is a bisamide. The bisamide may include, for example, a bisamide of the fatty acid with a C₁₋₆alkylenediamine (particularly, C₁₋₂alkylenediamine). The concrete examples of the bisamide may include a C₁₄₋₃₄higher fatty acid amide, e.g., ethylenediamine-dipalmitic acid amide, ethylenediamine-distearic acid amide (ethylene bis-stearyl amide), hexamethylenediamine-distearic acid amide, ethylenediamine-dibehenic acid amide, ethylenediamine-dimontanic acid amide, ethylenediamine-dioleic acid amide, and ethylenediamine-dierucic acid amide. Furthermore, a bisamide in which different species of acyl groups are independently bonded to amine sites of an alkylenediamine, such as ethylenediamine-(stearic acid amide)oleic acid amide, may be also used. In the acid amide, it is preferred that the fatty acid constituting the acid amide is a saturated fatty acid.

These long-chain (or higher) fatty acid amides or derivatives thereof may be used singly or in combination.

### (b) Polyoxyalkylene glycol

Exemplified as the polyoxyalkylene glycol may be a homopolymer of an alkylene glycol [e.g., a C₂₋₆alkylene glycol (preferably a C₂₋₄alkylene glycol) such as ethylene glycol, propylene glycol or tetramethylene glycol], a copolymer thereof, and a derivative of the homopolymer or the copolymer. Specifically, the polyoxyalkylene glycol may include a polyC₂₋₆oxyalkylene glycol (preferably a polyC₂₋₄oxyalkylene glycol) such as a polyethylene glycol, a polypropylene glycol or a polytetramethylene glycol, a copolymer, e.g., a polyoxyethylene-polyoxypropylene copolymer (e.g., a random or block copolymer), a polyoxyethylene-polyoxypropylene glyceryl ether, and a polyoxyethylene-polyoxypropylene monobutyl ether. The preferred polyoxyalkylene glycol includes a polymer having an oxyethylene unit (e.g., a polyethylene glycol, a polyoxyethylene-polyoxypropylene copolymer, and a derivative thereof), and the like. Moreover, the number average molecular weight of the polyoxyalkylene glycol is about 3 x 10² to 1 x 10⁶ (e.g., about 5 x 10² to 5 x 10⁵), and preferably about 1 x 10³ to 1 x 10⁵ (e.g., about 1 x 10³ to 5 x 10⁴).

These polyoxyalkylene glycols may be used singly or in combination.

### (c) Silicone compound

The silicone compound may include a polyorganosiloxane. Examples of the polyorganosiloxane may include a homopolymer of a dialkylsiloxane (e.g., dimethylsiloxane), an alkylarylsiloxane (e.g., methylphenylsiloxane) and a diarylsiloxane (e.g., diphenylsiloxane) (for example, a polydimethylsiloxane, and a polymethylphenylsiloxane), or a copolymer thereof. The polyorganosiloxane may be an oligomer. Moreover, as the polyorganosiloxane, there may be also mentioned a modified polyorganosiloxane having a substituent(s) [such as an epoxy group, a hydroxyl group, an alkoxy group, a carboxyl group, an amino group or a substituted amino group (e.g., a dialkylamino group), an ether group, a vinyl group or a (meth)acryloyl group] at an end or in the main chain of the molecule (e.g., a modified silicone). These silicone compounds may be used singly or in combination.

### (Heat stabilizer)

The heat stabilizer includes, for example, (a) an organic carboxylic acid or a metal salt thereof, (b) an alkaline or alkaline earth metal compound, (c) a phosphine compound, (d) a hydrotalcite, and (e) a zeolite.

### (a) Organic carboxylic acid or metal salt of organic carboxylic acid

The organic carboxylic acid may include, for example, a carboxyl group-containing compound having a pKa of not less than 3.6. Such a compound includes organic carboxylic acids described in Japanese Patent Application Laid-Open No. 239484/2000 (JP-2000-239484A), and others.

The metal salt of the organic carboxylic acid may include, for example, a salt of an organic carboxylic acid with a metal (e.g., an alkali metal such as Li, Na or K; an alkaline earth metal such as Mg or Ca; and a transition metal such as Zn).

The organic carboxylic acid constituting the metal salt of the organic carboxylic acid may be a compound having a low molecular weight or a compound having a high molecular weight. As the organic carboxylic acid, there may be used a saturated or unsaturated lower aliphatic carboxylic acid having less than 10 carbon atoms, and a polymer of an unsaturated aliphatic carboxylic acid, in addition to the saturated or unsaturated higher aliphatic carboxylic acids exemplified in the paragraph of the higher fatty acid. Moreover, these aliphatic carboxylic acids may have a hydroxyl group. The saturated lower aliphatic carboxylic acid may include, for example, a saturated C₁₋₉monocarboxylic acid (e.g., acetic acid, propionic acid, butyric acid, isobutyric acid, valeric acid, isovaleric acid, pivalic acid, caproic acid, and caprylic acid), a saturated C₂₋₉dicarboxylic acid (e.g., oxalic acid, malonic acid, succinic acid, glutaric acid, adipic acid, pimelic acid, cork acid, and azelaic acid), and a hydroxy acid thereof (e.g., glycolic acid, lactic acid, glyceric acid, hydroxybutyric acid, and citric acid).

The unsaturated lower aliphatic carboxylic acid may include, for example, an unsaturated C₃₋₉monocarboxylic acid [e.g., (meth)acrylic acid, crotonic acid, and isocrotonic acid], an unsaturated C₄₋₉dicarboxylic acid (e.g., maleic acid, and fumaric acid), and a hydroxy acid thereof (e.g., propiolic acid).

Moreover, exemplified as the polymer of the unsaturated aliphatic carboxylic acid may be a copolymer of a polymerizable unsaturated carboxylic acid [e.g., an α,β-ethylene-type (ethylenic) unsaturated carboxylic acid, for example, a polymerizable unsaturated monocarboxylic acid (such as (meth)acrylic acid), a polymerizable unsaturated polycarboxylic acid (such as itaconic acid, maleic acid, or fumaric acid), an anhydride of the polycarboxylic acid, a monoester of the polycarboxylic acid (e.g., a monoC₁₋₁₀alkylester of the polycarboxylic acid such as monoethyl maleate), and others] with an olefin (e.g., an α-C₂₋₁₀olefin such as ethylene or propylene).

These organic carboxylic acids or these metal salts of the organic carboxylic acids may be used singly or in combination.

The preferred organic carboxylic acid may include a copolymer of an olefin and (meth)acrylic acid, a hydroxy acid (e.g., glycolic acid, lactic acid, and 12-hydroxystearic acid), and others.

The preferred metal salt of the organic carboxylic acid includes a salt of an organic carboxylic acid with an alkaline or alkaline earth metal (e.g., magnesium acetate, calcium acetate, lithium citrate, sodium citrate, potassium citrate, calcium citrate, lithium stearate, magnesium stearate, calcium stearate, lithium 12-hydroxystearate, magnesium 12-hydroxystearate, and calcium 12-hydroxystearate), an ionomer resin (a resin in which at least part of carboxyl groups contained in the copolymer of the polymerizable unsaturated polycarboxylic acid with the olefin is neutralized with an ion of a metal such as an alkaline or alkaline earth metal or zinc), and others. The ionomer resin is, for example, commercially available as ACLYN (manufactured by Allied Signal Inc.), Himilan (manufactured by Du Pont-Mitsui Polychemicals Co., Ltd.), Surlyn (manufactured by Du Pont), and others.

### (b) Alkaline or alkaline earth metal compound

The alkaline or alkaline earth metal compound may include an inorganic compound exemplified by a metal oxide (such as CaO, or MgO), a metal hydroxide (such as LiOH, Ca(OH)₂, or Mg(OH)₂), and a salt of an inorganic acid with a metal [e.g., a salt of an inorganic acid (such as a salt of carbonic acid with a metal (such as Li₂CO₃, Na₂CO₃, K₂CO₃, CaCO₃ or MgCO₃), a borate, and a phosphate)]. Inparticular, the metal oxide and the metal hydroxide are preferred. Among the compounds, the alkaline earth metal compound is preferred.

These alkaline or alkaline earth metal compounds may be used singly or in combination.

### (c) Phosphine compound

As the phosphine compound, there may be mentioned an alkylphosphine (e.g., a triC₁₋₁₀alkyl-phosphine such as triethylphosphine, tripropylphosphine or tributylphosphine), a cycloalkylphosphine (e.g., a triC₅₋₁₂cycloalkylphosphine such as tricyclohexylphosphine), an arylphosphine (e.g., a triC₆₋₁₂arylphosphine such as triphenylphosphine, p-tolyldiphenylphosphine, di-p-tolylphenylphosphine, tri-m-aminophenylphosphine, tri-2,4-dimethylphenylphosphine, tri-2,4,6-trimethylphenylphosphine, tri-o-tolylphosphine, tri-m-tolylphosphine or tri-p-tolylphosphine), an aralkylphosphine (e.g., a triC₆₋₁₂arylC₁₋₄alkylphosphine such as tri-o-anisylphosphine or tri-p-anisylphosphine), an arylalkenylphosphine (e.g., a diC₆₋₁₂arylC₂₋₁₀ alkenylphosphine such as diphenylvinylphosphine or allyldiphenylphosphine), an arylaralkylphosphine (e.g., a diC₆₋₁₂aryl(C₆₋₁₂arylC₁₋₄alkyl)phosphine such as p-anisyldiphenylphosphine, or a C₆₋₁₂aryldi (C₆₋₁₂arylC₁₋₄alkyl)phosphine such as di-p-anisylphenylphosphine), an alkylarylaralkylphosphine (e.g., a C₁₋₁₀alkylC₆₋₁₂aryl(C₆₋₁₂ary1C₁₋₄alkyl)phosphine such as methylphenyl-p-anisylphosphine), and a bisphosphine [for example, a bis(diC₆₋₁₂arylphosphino)C₁₋₁₀alkane such as 1,4-bis(diphenylphosphino)butane]. These phosphine compounds may be used singly or in combination.

### (d) Hydrotalcite

As the hydrotalcite, hydrotalcites recited in Japanese Patent Application Laid-Open No. 1241/1985 (JP-60-1241A) and Japanese Patent Application Laid-Open No. 59475/1997 (JP-9-59475A), such as hydrotalcite compounds represented by the following formula are usable.

[M²⁺₁₋ₓM³⁺ₓ(OH)₂]^{x+}[Aⁿ⁻_{x/n}·mH₂O]^{x-}
In the formula, M²⁺ represents Mg²⁺, Mn²⁺, Fe²⁺, Co²⁺, or any of other divalent metal ions; M³⁺ represents Al³⁺, Fe³⁺, Cr³⁺, or any of other trivalent metal ions; Aⁿ⁻ represents CO₃²⁻, OH⁻, HPO₄²⁻, SO₄²⁻, or any of other n-valent anions (particularly, monovalent or divalent anion); x is 0< x <0.5; and m is 0≤ m <1.
These hydrotalcites may be used singly or in combination.

Incidentally, the hydrotalcite is available from Kyowa Chemical Industry Co., Ltd. under the trade name "DHT-4A", "DHT-4A-2", or "Alcamizer".

### (e) Zeolite

The zeolite is not particularly limited to a specific one, and for example, a zeolite recited in Japanese Patent Application Laid-Open No. 62142/1995 (JP-7-62142A) [zeolites, the smallest unit cell of which is a crystalline aluminosilicate with an alkaline and/or alkaline earth metal (A-, X-, Y-, L-, and ZSM-type zeolites, mordenite-type zeolite; chabazite, mordenite, faujasite, and other natural zeolites)] can be employed.

These zeolites may be used singly or in combination.

The heat stabilizers may be used singly or in combination. In particular, a combination use of the basic nitrogen-containing compound as a formaldehyde emission inhibitor, and at least one member selected from the group consisting of the phosphine compound, the organic carboxylic acid or the metal salt of thereof, the alkaline or alkaline earth metal compound, the hydrotalcite and the zeolite imparts a high thermal stability to a resin composition even if the amount of the heat stabilizer to be added is extremely small.

### (Proportion of stabilizer)

The proportion of the stabilizer may be selected depending on the kind (or species) thereof. For example, the proportion of the antioxidant (in particular, the hindered phenol compound and/or the hindered amine compound) is about 0.001 to 5 parts by weight, preferably about 0.005 to 3 parts by weight, and more preferably about 0.01 to 2 parts by weight, relative to 100 parts by weight of the polyacetal resin.

The proportion of the formaldehyde emission inhibitor is, for example, about 0.001 to 20 parts by weight, preferably about 0.01 to 10 parts by weight, more preferably about 0.01 to 5 parts by weight (e.g., about 0.01 to 2 parts by weight), and particularly about 0.02 to 5 parts by weight (e.g., about 0.02 to 2 parts by weight), relative to 100 parts by weight of the polyacetal resin.

The proportion of the processing stabilizer is about 0.001 to 10 parts by weight, preferably about 0.01 to 5 parts by weight (e.g., about 0.03 to 3 parts by weight), and particularly about 0.03 to 2 parts by weight, relative to 100 parts by weight of the polyacetal resin.

The proportion of the heat stabilizer may be selected from a range of, for example, about 0.001 to 10 parts by weight and preferably about 0.001 to 5 parts by weight (in particular, about 0.01 to 2 parts by weight), relative to 100 parts by weight of the polyacetal resin.
Moreover, the proportion of each stabilizer (the antioxidant, the processing stabilizer, the heat stabilizer or the weather-resistant stabilizer) relative to the formaldehyde emission inhibitor [the former/the latter (weight ratio)] may be about 99/1 to 1/99, preferably about 98/2 to 2/98, and more preferably about 95/5 to 10/90.

### [Other additives]

If necessary, the polyacetal resin composition of the present invention may further comprise a conventional additive, for example, a weather (light)-resistant stabilizer, an impact resistance improver (or an impact modifier), a gloss control agent (gloss controlling agent), an agent for improving sliding property (or a slide improver), a coloring agent (or a colorant), a filler, an odor-eliminating agent (or a deodorizing agent) (e.g., an odor-eliminating agent of an amine compound), a nucleating agent (e.g., a talc, and boron nitride), an antistatic agent, a flame retardant, a surfactant, an antibacterial agent, an antifungal agent, an aromatic agent, a foaming agent, a compatibilizing agent, an agent for improving properties (physical properties) (e.g., boric acid or a derivative thereof), a flavoring, and various polymers [for example, a polycarbonate-series resin, a polyolefinic resin, a polyvinyl alcohol-series resin, and a polyester-series resin (e.g. , a homo- or copolymer of an aliphatic polyester such as a poly(D-, L- or D/L-lactic acid), a polyglycolic acid, a poly(glycolic acid/lactic acid) copolymer)]. Among these additives, the weather (light)-resistant stabilizer, the impact resistance improver, the gloss control agent, the agent for improving sliding property, the coloring agent, and the filler are particularly preferred. These additives may be used singly or in combination.

### (Weather (light)-resistant stabilizer)

The weather (light)-resistant stabilizer may include (a) a benzotriazole compound, (b) a benzophenone compound, (c) an aromatic benzoate compound, (d) a cyanoacrylate compound, (e) an oxalic anilide compound, (f) a hydroxyphenyl-1,3,5-triazine compound, (g) a hindered amine compound, and others.

Examples of the benzotriazole compound (a) may include a benzotriazole compound having an aryl group substituted with a hydroxyl group and an alkyl (C₁₋₆alkyl) group, such as 2-(2'-hydroxy-5'-methylphenyl)benzotriazole, 2-(2'-hydroxy-3',5'-di-t-butylphenyl)benzotriazole, 2-(2'-hydroxy-3',5'-di-t-amylphenyl)benzotriazole or 2-(2'-hydroxy-3',5'-di-isoamylphenyl)benzotriazole; a benzotriazole compound having an aryl group substituted with a hydroxyl group and an aralkyl (or aryl) group, such as 2-[2'-hydroxy-3',5'-bis(α,α-dimethylbenzyl)phenyl]benz otriazole; a benzotriazole compound having an aryl group substituted with a hydroxyl group and an alkoxy (C₁₋₁₂alkoxy) group, such as 2-(2'-hydroxy-4'-octoxyphenyl)benzotriazole; and others. The preferred benzotriazole compound includes a benzotriazole compound having a C₆₋₁₀aryl (particularly, phenyl) group substituted with a hydroxyl group and a C₃₋₆alkyl group, as well as a benzotriazole compound having an aryl group substituted with a hydroxyl group and a C₆₋₁₀aryl-C₁₋₆alkyl (particularly, a phenyl-C₁₋₄alkyl) group.

Exemplified as the benzophenone compound (b) may be a benzophenone compound having a plurality of hydroxyl groups (e.g., a di- to tetrahydroxybenzophenone such as 2,4-dihydroxybenzophenone; a benzophenone compound having a hydroxyl group, and an aryl or aralkyl group substituted with a hydroxyl group, such as 2-hydroxy-4-oxybenzylbenzophenone); a benzophenone compound having a hydroxyl group and an alkoxy (C₁₋₁₆alkoxy) group (e.g., 2-hydroxy-4-methoxybenzophenone, 2-hydroxy-4-octoxybenzophenone, 2-hydroxy-4-dodecyloxybenzophenone, 2,2'-dihydroxy-4-methoxybenzophenone, 2,2'-dihydroxy-4,4'-dimethoxybenzophenone, and 2-hydroxy-4-methoxy-5-sulfobenzophenone); and others. The preferred benzophenone compound includes a benzophenone compound having a hydroxyl group, and a C₆₋₁₀aryl (or C₆₋₁₀aryl-C₁₋₄alkyl) group substituted with a hydroxyl group, particularly one having a hydroxyl group, and a phenyl-C₁₋₂alkyl group substituted with a hydroxyl group.

The aromatic benzoate compound (c) may include, for example, an alkylphenylsalicylate such as p-t-butylphenylsalicylate or p-octylphenylsalicylate.

Exemplified as the cyanoacrylate compound (d) may be a cyano group-containing diphenylacrylate such as 2-ethylhexyl-2-cyano-3,3-diphenylacrylate or ethyl-2-cyano-3,3-diphenylacrylate.

The oxalic anilide compound (e) may include, for example, an oxalic diamide compound having a phenyl group on a nitrogen atom in which the phenyl group may have a substituent(s), exemplified by N-(2-ethylphenyl)-N'-(2-ethoxy-5-t-butylphenyl)oxalic diamide, and N-(2-ethylphenyl)-N'-(2-ethoxy-phenyl)oxalic diamide.

Examples of the hydroxyphenyl-1,3,5-triazine compound (f) may include a diC₆₋₁₅aryl(hydroxy-C₁₋₂₀ alkoxyphenyl)-1,3,5-triazine such as 2,4-diphenyl-6-(2-hydroxyphenyl)-1,3,5-triazine, 2,4-diphenyl-6-(2,4-dihydroxyphenyl)-1,3,5-triazine, 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-6-(2-hydroxy-4-propoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, 2,4-di-p-tolyl-6-(2-hydroxy-4-methoxyphenyl)-1,3,5-triazine, 2,4-di-p-tolyl-6-(2-hydroxy-4-propoxyphenyl)-1,3,5-triazine, 2,4-di-p-tolyl-6-(2-hydroxy-4-butoxyphenyl)-1,3,5-triazine, 2,4-di-p-tolyl-6-(2-hydroxy-4-hexyloxyphenyl)-1,3,5-triazine, 2,4-di-p-tolyl-6-(2-hydroxy-4-pentoxyphenyl)-1,3,5-triazine, 2,4-di-p-tolyl-6-(2-hydroxy-4-octyloxyphenyl)-1,3,5-triazine, 2,4-di(2,4-dimethylphenyl)-6-(2-hydroxy-4-methoxyphenyl)-1,3,5-triazine, 2,4-di(2,4-dimethylphenyl)-6-(2-hydroxy-4-propoxyphenyl)-1,3,5-triazine, 2,4-di(2,4-dimethylphenyl)-6-(2-hydroxy-4-butoxyphenyl )-1,3,5-triazine, or 2,4-di(2,4-dimethylphenyl)-6-(2-hydroxy-4-hexyloxyphenyl)-1,3,5-triazine; a diC₆₋₁₅aryl(hydroxy-C₆₋₁₀arylC₁₋₄ alkyloxy-phenyl)-1,3,5-triazine such as 2,4-diphenyl-6-(2-hydroxy-4-benzyloxyphenyl)-1,3,5-triazine, 2,4-di-p-tolyl-6-(2-hydroxy-4-benzyloxyphenyl)-1,3,5-t riazine, or 2,4-di(2,4-dimethylphenyl)-6-(2-hydroxy-4-benzyloxyphe nyl)-1,3,5-triazine; and a diC₆₋₁₅ aryl-(hydroxy-C₁₋₁₀alkoxyethoxy-phenyl)-1,3,5-triazine such as 2,4-diphenyl-6-(2-hydroxy-4-(2-butoxyethoxy)phenyl)-1, 3,5-triazine, or 2,4-di-p-tolyl-6-(2-hydroxy-4-(2-hexyloxyethoxy)phenyl )-1,3,5-triazine.

The hindered amine compound (g) may include compounds exemplified in the paragraph of the antioxidant, and others.

The weather (light)-resistant stabilizers may be used singly, or used in combination of the same or different kind of compounds. In the weather-resistant stabilizer, it is preferred to use the hindered amine compound (g) in combination with at least one member selected from other weather (light)-resistant stabilizers (a) to (f). In particular, it is preferred to use the benzotriazole compound (a) and the hindered amine compound (f) in combination. The proportion of the hindered amine compound relative to other weather-resistant stabilizer (in particular the benzotriazole compound) [the former/the latter (weight ratio)] is, for example, about 0/100 to 80/20, preferably about 10/90 to 70/30, and more preferably about 20/80 to 60/40.

The amount of the weather (light)-resistant stabilizer may be, for example, about 0 to 5 parts by weight (e.g., about 0.01 to 5 parts by weight), preferably about 0.1 to 4 parts by weight, and more preferably about 0.1 to 2 parts by weight, relative to 100 parts by weight of the polyacetal resin.

### (Impact resistance improver)

Examples of the impact resistance improver or the gloss reducing agent may include an acrylic core-shell polymer [e.g., core-shell polymers described in Japanese Patent Application Laid-Open No. 26705/2000 (JP-2000-26705A)], a polyurethane-series resin, a polyester-series resin (thermoplastic polyester), and a styrenic elastomer (an SBS resin, an SEBS resin, a hydrogenerated SEBS resin, an SIS resin, an SEPS resin, an ABS resin, and an AES resin). The amount of the impact resistance improver may for example be about 0 to 100 parts by weight (e.g., about 1 to 100 parts by weight), preferably about 2 to 75 parts by weight, and more preferably about 3 to 60 parts by weight, relative to 100 parts by weight of the polyacetal resin.

### (Gloss control agent)

Examples of the gloss control agent may include, in addition to the resins exemplified in the paragraph of the impact resistance improver, an acrylic resin [e.g., a homo- or copolymer of an alkyl (meth)acrylate such as a poly(methyl methacrylate)), an AS resin, and an AES resin], a styrenic resin (e.g., a polystyrene), and others. The amount of the gloss control agent to be used may be, for example, about 0 to 30 parts by weight (e.g., about 0.01 to 20 parts by weight), preferably about 0.02 to 10 parts by weight, and more preferably about 0.05 to 5 parts by weight, relative to 100 parts by weight of the polyacetal resin.

### (Agent for improving sliding property)

The agent for improving sliding property (or slide improver) may include an olefinic resin, a silicone-series resin, a fluorine-containing resin, and others. The amount of the slide improver may for example be about 0 to 50 parts by weight (e.g., about 0.1 to 50 parts by weight), preferably about 1 to 30 parts by weight, and more preferably about 3 to 20 parts by weight, relative to 100 parts by weight of the polyacetal resin.

### (Coloring agent)

The coloring agent may include various dyes or pigments. As the dye, a solvent dye is preferred, and may include, for example, an azo-series dye, an anthraquinone-series dye, a phthalocyanine-series dye or a naphthoquinone-series dye. The pigment may be an inorganic pigment or an organic pigment.

Exemplified as the inorganic pigment may be a titanium-series (titanium-containing) pigment, a zinc-series (zinc-containing) pigment, a carbon black (e.g., a furnace black, a channel black, an acetylene black, and Ketjen black), an iron-series (iron-containing) pigment, a molybdenum-series (molybdenum-containing) pigment, a cadmium-series (cadmium-containing) pigment, a lead-series (lead-containing) pigment, a cobalt-series (cobalt-containing) pigment, and an aluminum-series (aluminum-containing) pigment.

The organic pigment may be exemplified by an azo-series pigment, an anthraquinone-series pigment, a phthalocyanine-series pigment, a quinacridone-series pigment, a perylene-series pigment, a perinone-series pigment, an isoindoline-series pigment, a dioxazine-series pigment, or a threne-series pigment.

The coloring agent may be used singly, or a plurality of these coloring agents may used in combination. Among these coloring agents, the use of a coloring agent having a high light-shielding effect [such as a carbon black, a titanium white (a titanium oxide) or a phthalocyanine-series pigment, a perylene-series black pigment (e.g., pigments described in WO03/010241 publication and WO03/010242 publication), particularly a carbon black, and a perylene-series black pigment] ensures improvement in weather (light)-resistance of the polyacetal resin composition.

The amount of the coloring agent is, for example, relative to 100 parts by weight of the polyacetal resin, about 0 to 5 parts by weight (e.g., about 0.01 to 5 parts by weight), preferably about 0.1 to 4 parts by weight, and more preferably about 0.1 to 2 parts by weight.

### (Filler)

The resin composition of the present invention may be further blended with one or combination of a conventional filler (such as a fibrous, plate-like or particulate filler) to improve properties of the molded product. Examples of the fibrous filler may include an inorganic fiber (e.g., a glass fiber, a carbon fiber, a boron fiber, and a potassium titanate fiber (whisker)), an organic fiber (e.g., an amide fiber), and others. As the plate-like filler, there may be mentioned a glass flake, a mica, a graphite, a variety of metal foils, and others. Examples of the particulate filler may include a metal oxide (e.g., zinc oxide, and alumina), a sulfate (e.g., calcium sulfate, and magnesium sulfate), a carbonate (e.g., calcium carbonate), a glass (e.g., a milled fiber, a glass bead, and a glass balloon), a silicate (e.g., a talc, a kaolin, a silica, a diatomite, a clay, and a wollastonite), a sulfide (e.g., molybdenum disulfide, and tungsten disulfide), a carbide (e.g., graphitefluoride, and silicon carbide), an activated carbon, boron nitride, and others.

The amount of the filler is, for example, about 0 to 100 parts by weight (e.g., about 1 to 100 parts by weight), preferably about 3 to 80 parts by weight, and more preferably about 5 to 50 parts by weight, relative to 100 parts by weight of the polyacetal resin.

### [Production process of polyacetal resin composition]

The polyacetal resin composition may be a particulate mixture or a molten mixture, and it may be prepared by mixing the polyacetal resin having a specific trioxane content (e.g., a polyacetal resin having a trioxane content of not more than 100 ppm) with at least one stabilizer selected from the group consisting of an antioxidant, a formaldehyde emission inhibitor, a processing stabilizer and a heat stabilizer, and if necessary, with other additive(s) [for example, a weather (light)-resistant stabilizer, an impact resistance improver, a slide improver, a gloss control agent, a coloring agent, and a filler], in a conventional manner.

The concrete preparation method of the polyacetal resin composition (or the shaping or molding method of the polyacetal resin composition) may include, for example, (1) a method comprising feeding (or supplying) all components through a main feed port (or a main supply port), kneading and extruding the fed components by using an extruder to prepare pellets, and molding a product from the pellets; (2) a method comprising feeding component (s) containing no formaldehyde emission inhibitor (e.g., component(s) such as a polyacetal resin, other stabilizer such as an antioxidant, and/or other additive(s)) through a main feed port and feeding component(s) containing at least a formaldehyde emission inhibitor (e.g., components containing a polyacetal resin, other stabilizer such as an antioxidant, and/or other additive(s) in addition to the formaldehyde emission inhibitor) from a side feed port, kneading and extruding the fed components by using an extruder to prepare pellets, and molding a product from the pellets; (3) a method comprising feeding component (s) containing part of a formaldehyde emission inhibitor (e.g., components containing a polyacetal resin, other stabilizer such as an antioxidant, and/or other additive (s) in addition to the formaldehyde emission inhibitor) through a main feed port and feeding component(s) containing the residual component(s) or other kind of formaldehyde emission inhibitor (e.g., components containing a polyacetal resin, other stabilizer such as an antioxidant, and/or other additive(s)) through a side feed port, kneading and extruding the fed components by using an extruder to prepare pellets, and molding a product from the pellets; (4) a method comprising once making pellets (master batch) different in formulation, mixing (diluting) the pellets in a certain proportion with other component(s), and molding a product having a predetermined formulation from the resulting pellets; (5) a method comprising attaching a stabilizer (e.g., a formaldehyde emission inhibitor) to a polyacetal resin pellet by spraying, coating, or other means, and then molding the resulting matter into a molded product having a predetermined formulation; and others.

In particular, in the above preparation methods of the polyacetal resin composition, (1), (2) and (3), it is preferred to melt-mix (melt-knead) components to prepare the polyacetal resin composition by using an extruder (uniaxial or biaxial extruder) having exhaust port (s) (e.g., exhaust vent port(s)) of not less than 1. Moreover, in the methods (2) and (3) comprising feeding part or all of the formaldehyde emission inhibitor through the middle part of the extruder (that is, side-feeding), it is possible to side-feed the inhibitor through the middle of the exhaust port (e.g. , the upstream or the downstream from the exhaust port). Further, in the extruding and preparing step (or melt-mixing step), the amount of formaldehyde emitted from the obtained molded product can be further reduced by a preparation method comprising adding a processing auxiliary [for example, at least one member selected from the group consisting of water, and an alcohol (e.g., a C₁₋₄alcohol such as methanol, ethanol, isopropyl alcohol or n-propyl alcohol)], for example preblending or infusing the processing auxiliary through a feed port of the upstream of an exhaust vent port, and exhausting and removing volatile component (s) containing the processing auxiliary from the exhaust port (e.g., exhaust vent port). The amount of water and/or the alcohol to be added as such a processing auxiliary is usually about 0 to 20 parts by weight, preferably about 0.01 to 10 parts by weight, and more preferably about 0.1 to 5 parts by weight, relative to 100 parts by weight of the polyacetal resin.

Moreover, particularly, in the case of melt-mixing the polyacetal resin and the formaldehyde emission inhibitor (in particular, at least one formaldehyde emission inhibitor selected from the group consisting of a urea compound and a hydrazide compound) by using an extruder, since the formaldehyde-trapping rate of the formaldehyde emission inhibitor (in particular, a urea compound, or a hydrazide compound) is high and, in contrast, the formaldehyde-trapping amount is limited, the preferably used method is an extruding and preparing method comprising side-feeding at least the formaldehyde emission inhibitor through a side feed port of the extruder, and/or an extruding and preparing method comprising setting up a melt-kneading or melt-mixing time (average residence time of the components) in the extruder as a short time (e.g., not longer than 300 seconds, preferably not longer than 250 seconds, more preferably not longer than 200 seconds, and particularly about 10 to 150 seconds).

Incidentally, in the preparation of a composition for use in a molded product, mixing of a powdered (particulate) polyacetal resin as a substrate (base resin) (e.g., a powder (particulate) obtained by grinding (pulverizing) part or all of the polyacetal resin) with other components (e.g., an antioxidant, a formaldehyde emission inhibitor, a processing stabilizer, a heat stabilizer, a weather (light)-resistant stabilizer, an impact resistance improver or a gloss reducing agent, a slide improver, a coloring agent and a filler) followed with melt-kneading improves the degree of dispersion of the added components, and therefore is advantageous.

Moreover, in the case of conducting the solvent treatment and/or the heat treatment, as described above, the solvent treatment and/or the heat treatment may be conducted to a polyacetal resin composition (particularly, a pelletized composition) obtained by melt-mixing (melt-kneading) a polyacetal resin (particularly, a polyacetal resin which may be subjected to a solvent and/or a heat treatment and has a trioxane content of not more than 100 ppm, that is, a polyacetal resin having the specific trioxane content) with a stabilizer (at least one member selected from an antioxidant, a formaldehyde emission inhibitor, a processing stabilizer, and a heat stabilizer), (and if necessary other additive(s)) by the above preparing methods (1) to (5), and extruding the resultant mixture by an extruder to obtain the resin composition (particularly, a pellet).

The polyacetal resin composition of the present invention ensures to remarkably inhibit the trioxane elution as well as the generation (emission) of a volatile organic compound(s) including trioxane from the molded product. The resin composition of the present invention is useful in fabricating a variety of molded products by such a conventional molding method as injection molding, extrusion molding, compression molding, blow molding, vacuum molding, foam molding, rotation molding, and gas injection molding.

### (Molded product)

The polyacetal resin molded product of the present invention formed from the above-mentioned polyacetal resin composition comprises (contains) a specific polyacetal resin and a specific stabilizer (e.g., an antioxidant, a formaldehyde emission inhibitor, a processing stabilizer, and a heat stabilizer) in combination, and has excellent stability for an extrusion and/or molding process. The polyacetal resin molded product has an extremely small amount of trioxane elution and emission (or generation) of a volatile organic compound including trioxane. In other words, molded products comprising the conventional polyacetal resins elutes trioxane as well as generates a volatile organic compound including trioxane in a certain amount. For example, the amount of trioxane elution into water from commercially available ordinary polyacetal resin molded products with water is about 10 to 20 ppm, and the emission (generation) amount of a volatile organic compound including trioxane therefrom is about 20 to 30 µg/g.

On the other hand, since the polyacetal resin molded product of the present invention employs a resin composition containing a polyacetal resin having an extremely small amount of trioxane and a stabilizer, the amount of trioxane elution (the amount of trioxane elution extracted with distilled water by heating the molded product under reflux for 2 hours) from the molded product can be reduced to not more than 10 mg (about 0 to 10 mg, for example, about 0.005 to 10 mg), preferably not more than 5 mg (about 0 to 5 mg, for example, about 0.01 to 5 mg), and more preferably not more than 1 mg (about 0 to 1 mg, for example, about 0.03 to 1 mg) per weight (kg) of the molded product.

Incidentally, the amount of trioxane elution can be measured as a trioxane elution amount (mg/kg) per weight (kg) of the polyacetal resin molded product by quantitatively determining an extract solution by GC/MS method, in which the extraction solution is obtained by an extraction of the molded product with distilled water (50 mL/dm²) with heating under reflux for 2 hours.

Moreover, the present invention realizes to reduce the generation of volatile organic compound including trioxane from the polyacetal resin molded product in such an amount [the amount of a volatile organic compound generated under heating at a temperature of 120°C for 5 hours (in accordance with an evaluation condition of Germany's Automotive Standards VDA 277), which is determined in terms of acetone, that is, not more than 15 µg (about 0 to 15 µg, for example, about 0.005 to 15 µg), preferably not more than 10 µg (about 0 to 10 µg, for example, about 0.01 to 10 µg), and more preferably not more than 5 µg (about 0 to 5 µg, for example, about 0.03 to 5 µg), per one gram of the molded product.

Further, in the case of using a formaldehyde emission inhibitor as a stabilizer, formaldehyde generation from the molded product can be effectively reduced to an extremely low level, in addition to remarkably inhibition of the trioxane elution (e.g., not more than 10 mg/kg) as well as the generation of a volatile organic compound including trioxane (e.g., not more than 15 mg/kg). In particular, addition of a basic nitrogen-containing compound (particularly, an aminotriazine compound, a urea compound, and a hydrazine compound) as a formaldehyde emission inhibitor ensures to reduce the formaldehyde generation to the level unreached previously. For example, the formaldehyde emission from commercially available ordinary polyacetal resin molded products is about 2 to 5 µg per one cm² of surface area under dry conditions (in a constant-temperature dry atmosphere) and about 3 to 6 µg per one cm² of surface area under humid conditions (in a constant-temperature moisture-laden atmosphere).

On the other hand, in the molded product of the present invention, in dry conditions, the formaldehyde emission is not more than 1.5 µg per one cm² of surface area of the molded product, preferably not more than 1.0 µg (e.g., about 0 to 1.0 µg), more preferably about not more than 0.6 µg (e.g., about 0 to 0.6 µg), and usually about 0.001 to 1.0 µg. In particular, it is possible to achieve the amount of formaldehyde emission, for example, not more than 0.1 µg, e.g., about 0 to 0.09 µg, preferably about 0.005 to 0.09 µg, and more preferably about 0.008 to 0.08 µg, per one cm² of surface area of the molded product, by particularly adjusting the kind of polyacetal resin, or a trioxane concentration thereof, a combination of a formaldehyde emission inhibitor to be used or other additive(s) (e.g., a hindered phenol compound), or a proportion thereof.

Moreover, in humid conditions, the formaldehyde emission is not more than 2.5 µg (about 0 to 2 µg) per one cm² of surface area of the molded product, preferably not more than 1.2 µg (e.g., about 0 to 1.2 µg), more preferably not more than 0.4 µg (e.g., about 0 to 0.4 µg), particularly about 0 to 0.2 µg, and usually about 0.001 to 1.2 µg. In particular, it is possible to achieve the amount of formaldehyde emission, for example, not more than 0.2 µg, e.g., about 0 to 0.15 µg, preferably about 0.005 to 0.1 µg, and more preferably about 0.01 to 0.09 µg, per one cm² of surface area of the molded product, by particularly adjusting the kind of the polyacetal resin, a trioxane concentration thereof, a combination of a formaldehyde emission inhibitor to be used or other additive (s) (e.g., a hindered phenol compound), or a proportion thereof.

The molded product of the polyacetal resin according to the present invention may show the above-mentioned formaldehyde emission under either dry conditions or humid conditions. In particular, a molded product showing the above formaldehyde emission level under both dry and humid conditions is preferably used as a material which can be adapted to more severe environment.

Incidentally, the formaldehyde emission under dry conditions can be determined as follows.

After the molded product of polyacetal resin is cut if necessary and its surface area is measured, a suitable portion of the product (e.g. the amount equivalent to a surface area of about 10 to 50 cm²) is placed in a vessel (20 ml capacity) to seal and stand (or maintained) at a temperature of 80°C for 24 hours. Then, this sealed vessel is charged with 5 ml of water and the formaldehyde (formalin) in the aqueous solution is assayed in accordance with JIS K0102, 29 (under the heading of Formaldehyde) to calculate the formaldehyde emission per unit surface area of the molded product (µg/cm²).

Moreover, the formaldehyde emission under humid conditions can be determined as follows.

After the molded product of a polyacetal resin is cut if necessary and its surface area is measured, a suitable portion of the molded product (e.g. the amount equivalent to a surface area of about 10 to 100 cm²) is suspended from the lid of a sealable vessel (1 L capacity) containing 50 ml of distilled water. After seal of the vessel, the vessel is allowed to stand (or maintained) in a constant temperature oven at 60°C for 3 hours. Thereafter, the vessel is allowed to stand at a room temperature for 1 hour and the formalin (formaldehyde) in the aqueous solution within the vessel is assayed in accordance with JIS K0102, 29 (under the heading of Formaldehyde) to calculate the formaldehyde emission per unit surface area of the product (µg/cm²).

The above quantitative limitations on trioxane elution, generation (emission) of a volatile organic compound including trioxane, and further formaldehyde emission in the present invention is valid as far as the polyacetal resin having a specific quality (specific trioxane content) and the specific stabilizer are contained not only for molded products available from polyacetal resin compositions comprising the conventional additives (e.g., a conventional stabilizer, and an improver), but also for molded products molded from comparable resin compositions containing an inorganic filler and/or other polymers, even if only a major part of the surface of the product (for example, 50 to 100% of the total surface area) is constituted by the polyacetal resin (for example, a multi-colored product or a coated product).

The molded product according to the present invention finds application in any field of use where trioxane is objectionable, and particularly can be used advantageously as parts and members in a variety of fields inclusive of food grade parts, automotive parts, electrical and electronic component (driving component and driven component) parts, architectural members and pipeline installation parts, household and cosmetic product parts, medical parts (parts for diagnostic or therapeutic use), and photographic parts.

More concretely, the food grade parts may include [for example, eating utensils (devices for eating) (e.g., containers, trays, spoons), cooking utensils (e.g., air rollers, mesh rollers, and cleavers or kitchen knives), cocks (e.g., cocks for drinking water), packages, cooking appliance parts (e.g., parts for an ice-cream making machine), freezer parts, washing machine parts (e.g., parts for vegetable washers, dish washers, and bottle washers), drying machine parts (e.g., parts for dish drying machines), water purifier parts, pot parts, thermos bottle parts, jar parts, and mixer parts.

The automotive parts may include car interior parts such as the inner handle, fuel trunk opener, seat belt buckle, assist lap, various switches, knob, lever, and clip; electrical system parts such as meters and connectors; in-vehicle electrical and electronic parts or mountings related to audio equipment and car navigation equipment, parts in contact with metals, typically the window regulator carrier plate, mechanical parts such as door lock actuator parts, mirror parts, wiper motor system parts, and fuel system parts.

The electrical or electronic component parts (the mechanical parts) may include, for example, parts or members constituted with molded products of polyacetal resin products and fitted with a number of metal contacts [e.g. , audio equipments such as the cassette tape recorders, video equipments such as the video tape recorders (VTR), 8 mm or other video cameras, etc., office automation (OA) equipments such as copying machines, facsimiles, word processors, computers, toys actuated by the driving force of an electric motor or a spring, telephones, a keyboard as an accessory to a computer or the like]. To be specific, there can be mentioned the chassis, gear, lever, cam, pulley, and bearing. Furthermore, the invention is applicable to optical and magnetic recording medium parts at least partly made of (comprising) a polyacetal resin molded product (e.g., metal thin-film magnetic tape cassettes, magnetic disk cartridges, and opticomagnetic disc cartridges) and more particularly, the metal tape cassettes for music, digital audio tape cassettes, 8 mm video tape cassettes, floppy (registered trade mark) disk cartridges, minidisk cartridges, etc. As concrete examples of the optical and magnetic medium parts, there can be mentioned tape cassette parts (e.g., tape cassette bodies, reels, hubs, guides, rollers, stoppers, and lids) and disk cartridge parts (e.g., disk cartridge bodies (cases), shutters, and clamping plates).

In addition, the molded product of a polyacetal resin according to the present invention is preferably used in architectural members and pipeline parts such as lighting equipment parts, interior architectural members, pipings, cocks, faucets, or rest room (lavatory)-related parts, a broad range of products related to daily living, cosmetic products, medical devices, and photography, for example, fasteners (such as slide fasteners, snap fasteners, hoop-and-loop fasteners, and rail fasteners), stationeries, chapstick or lipstick cases, spray nozzles, spray devices, aerosol containers, general vessels, syringe holders, camera parts, and photographic film parts.

### INDUSTRIAL APPLICABILITY

The present invention is preferably applicable for any field of use where trioxane is objectionable, e.g., for food grade parts, automotive parts, electrical and electronic component parts (driving component and driven component), architectural members and pipeline installation parts, household and cosmetic product parts, medical device (for diagnostic or therapeutic use) parts, and photographic parts.

### EXAMPLES

The following examples are intended to describe this invention in further detail and should by no means be interpreted as defining the scope of the invention.

Incidentally, referring to the examples and comparative examples, the amount of trioxane eluted from the molded products with hot water, the amount of emission of a volatile organic compound including trioxane from the molded product, and the amount of emission of formaldehyde from the molded (or shaped) products under dry and humid (wet) conditions were evaluated by the following methods.

### [Amount of trioxane elution from molded product]

Each polyacetal resin molded product consisting of 2 test pieces (one test piece: 50 mm x 50 mm x 2 mm; total surface area: about 108 dm²), was subjected to an extract treatment with 54 mL of distilled water by heating under reflux for 2 hours, and the extract solution was subjected to quantitatively determine the amount of trioxane elution (mg/kg) per weight (1 kg) of polyacetal resin molded product by GC/MS method.

### [Amount of formaldehyde emission from molded product in dry conditions]

Each resin sample consisting of 10 test pieces (one test piece: 2 mm x 2 mm x 50 mm; total surface area: about 40 cm²) was placed in a vessel (capacity 20 ml) to seal and heated in a constant temperature oven at 80°C for 24 hours. After air-cooling to room temperature, 5 ml of distilled water was injected into the vessel using a syringe. The formaldehyde content of this aqueous solution was determined in accordance with JIS K0102, 29 (under the heading of Formaldehyde) and the formaldehyde gas emission per surface area (µg/cm²) was calculated.

### [Amount of formaldehyde emission from molded product in humid conditions]

Two plate test pieces (one piece: 100 mm x 40 mm x 2 mm; total surface area of 85.6 cm²) were suspended from a lid of a polyethylene bottle (capacity 1 L) containing 50 ml of distilled water. The bottle was sealed to stand in a constant temperature oven at 60°C for 3 hours, followed by standing for 1 hour at room temperature. The formaldehyde content of the aqueous solution in the bottle was determined in accordance with JIS K0102, 29 (under the heading of Formaldehyde) and the formaldehyde gas emission per surface area of the product (µg/cm²) was calculated.

### [Amount of volatile organic compound from molded product]

The amount of a volatile organic compound from the molded products was determined in accordance with VDA277 (Germany Automotive Standard).

A polyacetal resin molded product (100 mm×40 mmx2 mm) was cut into 10 to 25 mg of resin pieces, and a sample comprising the resin pieces in total 2 g was placed in a vial container (capacity 22 mL), and the weight of the resin sample was precisely weighed. Then the vial container was sealed and subjected to heat treatment at 120°C for 5 hours with a HS-GC. Then, the amount of the volatile organic compound (µg/g) per 1 gof the polyacetal resin molded product was measured in terms of acetone as standard for weight by calculating a peak integral capacity of the volatile organic compound component detected by a gas chromatography.

### Examples 1 to 4, 6 to 7, 12 to 22, and 26 to 30

To 100 parts by weight of a polyacetal copolymer having a specific trioxane content were preblended (or premixed)an antioxidant,aformaldehyde emission inhibitor, a processing stabilizer, a heat stabilizer, a coloring agent, a weather (light)-resistant stabilizer, and a processing auxiliary (water) in the proportions indicated in Tables 1 to 3. Concerning each of thus obtained mixtures, the mixture was supplied through a main feed port of a biaxial extruder (30 mm diameter) having one vent port, and melt-mixed (extrusion condition: L/D=35, extrusion temperature: 200°C, screw rotation frequency: 100 rpm, vent vacuum: 70 cmHg, discharging rate: 15 kg/hr, and average residence time: 100 seconds) to prepare a pelletized composition. The pelletized composition was subjected to heat treatment at 140°C for 3 hours under atmosphere by means of a blower drier.

From thus obtained pellets, prescribed test pieces were fabricated with an injection molding machine, and the amount of trioxane elution, the amount of a volatile organic compound(s), and the amount of formaldehyde emission from each of the prescribed test pieces were evaluated. The results are shown in Tables 1 to 3.

### Examples 5, 8 to 11, and 23

To 95 parts by weight of a polyacetal copolymer having a specific trioxane content were preblended (or premixed) an antioxidant, a processing stabilizer, a heat stabilizer, a weather (light)-resistant stabilizer, a coloring agent, and a processing auxiliary (water) in the proportions indicated in Tables 1 to 3 to prepare a preblended material. Concerning each of thus obtained preblended materials, the preblended material was supplied through a main feed port of a biaxial extruder (30 mm diameter) having one vent port, and melt-mixed (extrusion condition: L/D=35, extrusion temperature: 200°C, screw rotation frequency: 100 rpm, vent vacuum: 70 cmHg, discharging rate: 15 kg/hr, and average residence time: 100 seconds), and additionally a blended material containing 5 parts by weight of a polyacetal copolymer particulate having the same trioxane content with the above polyacetal copolymer and a formaldehyde emission inhibitor was side-fed through a side-feed port in the downstream of the vent port in the extruder to prepare a pelletized composition. The pelletized composition was subjected to heat treatment at 140°C for 3 hours under atmosphere by means of a blower drier.

From thus obtained pellets, prescribed test pieces were fabricated with an injection molding machine, and the amount of trioxane elution, the amount of the volatile organic compound, and the amount of formaldehyde emission from each of the prescribed test pieces were evaluated. The results are shown in Tables 1 to 3.

### Example 24

The pellet of the polyacetal resin composition obtained in Example 7 was supplied through a main feed port of a biaxial extruder (30 mm diameter) having one vent port, melt-mixed (extrusion condition: L/D=35, extrusion temperature: 200°C, screw rotation frequency: 100 rpm, vent vacuum: 70 cmHg, and discharging rate: 15 kg/hr), and heat-treated at 140°C for 3 hours. This procedure was performed twice to give a pelletized composition (total residence time: 200 seconds).

From the pellet, a prescribed test piece was fabricated with an injection molding machine, and the amount of trioxane elution, the amount of the volatile organic compound, and the amount of formaldehyde emission from the prescribed test piece were evaluated. The amount of trioxane elution was 0. 38 mg/kg, the amount of formaldehyde emission was 0.08 µg/cm² in the dry condition and 0.15 µg/cm² in the humid condition, and the amount of the volatile organic compound was 2.4 µg/g.

### Example 25

A pelletized polyacetal resin composition was prepared in the same way as Example 7 except for without a formaldehyde emission inhibitor (c-6). In a polyethylene bag, 100 parts by weight the polyacetal resin composition pellet and 0.15 part by weight of the formaldehyde emission inhibitor (c-6) were blended to obtain a blended mixture. From thus obtained pellets, prescribed test piece was fabricated with an injection molding machine, and the amount of trioxane elution, and the amount of formaldehyde emission from the prescribed test piece were evaluated. The amount of trioxane elution was 0.43 mg/kg, the amount of formaldehyde emission was 0.01 µg/cm² in the dry condition and 0.04 µg/cm² in the humid condition, and the amount of the volatile organic compound was 2.9 µg/g.

### Comparative Examples 1 to 4

Incidentally, for comparison, a polyacetal copolymer having a high trioxane content was evaluated as described above. The results are shown in Table 3.

The polyacetal copolymers (polyacetal resin copolymers), the antioxidants, the formaldehyde emission inhibitors, the processing stabilizers, the heat stabilizers, the coloring agents, the weather (light)-resistant stabilizers, the processing auxiliaries used in the Examples and Comparative Examples are as follows.

### 1. Polyacetal copolymer "a"

(a-1): Polyacetal copolymer [trioxane content=99 mg/kg, melt index =9 g/10 minutes]
(a-2): Polyacetal copolymer [trioxane content=3 mg/kg, melt index =9 g/10 minutes]
(a-3): Polyacetal copolymer [trioxane content=0.19 mg/kg, melt index =9 g/10 minutes]
(a-4): Polyacetal copolymer [trioxane content=4 mg/kg, melt index =9 g/10 minutes]
(a-5): Polyacetal copolymer [trioxane content=290 mg/kg, melt index =9 g/10 minutes]
(a-6): Polyacetal copolymer [trioxane content=250 mg/kg, melt index =9 g/10 minutes]

### [Production process of polyacetal copolymer]

### [Production process of polyacetal copolymer (a-1)]

Into a biaxialy paddle-typed continuous polymerization apparatus, were continuously supplied 3.5% by weight of 1,3-dioxolane as a comonomer and trioxane containing 700 ppm of methylal as a molecular-weight adjusting agent, at the same time, dibutyl etherate of boron trifluoride was continuously added into the same apparatus to have a concentration of 20 ppm in terms of boron trifluoride relative to the total monomer amount, and polymerized. Thereafter, the polymerized product discharged from the discharge opening of the polymerization apparatus was charged into 1000 ppm of triethylamine aqueous solution to deactivate the boron trifluoride (catalyst), and the resultant was subjected to centrifugation and dry treatment to obtain a crude polyacetal copolymer. Further, to 100 parts by weight of the crude polyacetal copolymer was mixed 0.1 part by weight of triethylene glycol bis[3-(3-t-butyl-5-methyl-4-hydroxyphenyl) propionate] as an antioxidant, and the mixture was supplied to a biaxial extruder having a vent port. With aspirating at a resin temperature of 210°C under vent vacuum degree of 20 Torr, an aqueous solution of triethylamine (5% by weight) was added in a proportion of 3 parts by weight per 100 parts by weight of the crude polyacetal copolymer to the biaxial extruder, and the mixture was melt-mixed to obtain a pelletized stable polyacetal copolymer (A). Further, 100 parts by weight of the pelletized stable polyacetal copolymer and 1000 parts by weight of an aqueous solution containing 15% methanol were mixed with stirring in an autoclave at 100°C for 2 hours, then the heat-treated pellet was separated and dried under heating at 140°C for 3 hours to obtain a polyacetal copolymer (a-1).

The polyacetal copolymer (a-1) has a terminal hemiformal group of 1.1 mmol/kg, a terminal formyl group of 1.1 mmol/kg, and an unstable terminal group of 0.48% by weight.

### [Production process of polyacetal copolymer (a-2)]

With the use of a tubular heat-retainable pressure container which was equipped with an agitation axis having a blade (fin) having a screwing action to the downward, the stable polyacetal copolymer (A) was continuously supplied at the rate of 100 parts by weight per 1 hour thereto with slowly rotating the agitation axis. The stable polyacetal copolymer (A) was hold and accumulated in the tubular container at a certain height, and removed from the bottom of the tubular container after the holding period (retention period) of 2 hours. Meanwhile, an aqueous solution medium containing 500 ppm of triethylamine was supplied into the case from the bottom at the rate of 800 parts by weight per one hour to flow between the accumulated polymer pellets, and removed from the top of the tubular container. Incidentally, in the contact treatment in which the aqueous solution medium containing 500 ppm of triethylamine was transferred (or flowed) in the opposite direction (i.e., the counterflow direction) of the polyacetal copolymer (A), the contact temperature used therein was 130 to 138°C. Thereafter, the pellets subjected to the contact treatment were separated, and dried under heating at 140°C for 3 hours at nitrogen atmosphere to obtain a polyacetal copolymer (a-2).

The polyacetal copolymer (a-2) has a terminal hemiformal group of 0.8 mmol/kg, a terminal formyl group of 0.9 mmol/kg, and an unstable terminal group of 0.38% by weight.

### [Production process of polyacetal copolymer (a-3)]

Except that the retention time of the stable polyacetal copolymer (A) was 7 hours, the same manner (the same contact treatment and the same heat and dry treatment) with a polyacetal copolymer (a-2) was conducted to obtain a polyacetal copolymer (a-3).

The polyacetal copolymer (a-3) has a terminal hemiformal group of 0.7 mmol/kg, a terminal formyl group of 0.6 mmol/kg, and an unstable terminal group of 0.20% by weight.

### [Production process of polyacetal copolymer (a-4)]

Into a biaxialy paddle-typed continuous polymerization apparatus, were continuously supplied 3.5% by weight of 1,3-dioxolane as a comonomer and trioxane containing 700 ppm of methylal as a molecular-weight adjusting agent, at the same time, dibutyl etherate of boron trifluoride was continuously added into the same apparatus to have a concentration of 20 ppm in terms of boron trifluoride relative to the total monomer amount, and polymerized. Thereafter, the polymerized product discharged from the discharge opening of the polymerization apparatus was charged into 1000 ppm of triethylamine aqueous solution to deactivate the boron trifluoride (catalyst), and the resultant was subjected to centrifugation and dry treatment to obtain a crude polyacetal copolymer. Further, to 100 parts by weight of the crude polyacetal copolymer was mixed 0.3 part by weight of triethylene glycol bis[3-(3-t-butyl-5-methyl-4-hydroxyphenyl) propionate] as an antioxidant, and the mixture was supplied to a biaxial extruder having a vent port. With aspirating at a resin temperature of 210°C under vent vacuum degree of 20 Torr, To the biaxial extruder, was added an aqueous solution of formic acid salt with chorine (0.7% by weight) in a proportion of 3 parts by weight per 100 parts by weight of the crude polyacetal copolymer with melt-mixing to obtain a pelletized stable polyacetal copolymer (B). Then with the use of a tubular heat-retainable pressure container which was equipped with an agitation axis having a blade (fin) having a screwing action to the downward, a pelletized stable polyacetal copolymer (B) was continuously supplied at the rate of 100 parts by weight per 1 hour thereto with slowly rotating the agitation axis. The stable polyacetal copolymer (B) was hold and accumulated in the tubular container at a certain height, and removed from the bottom of the tubular container after the holding period (retention period) of 2 hours. Meanwhile, an aqueous medium was supplied into the case from the bottom at the rate of 800 parts by weight per one hour to flow between the accumulated polymer pellets, and removed from the top of the tubular container. Incidentally, in the contact treatment in which the aqueous medium was transferred (or flowed) in the opposite direction (i.e., the counterflow direction) of the polyacetal copolymer (B), the contact temperature used thereinwas 130 to 135°C. Thereafter, the pellets subjected to the contact treatment were separated, and dried under heating at 140°C for 3 hours at nitrogen atmosphere to obtain a polyacetal copolymer (a-4).

The polyacetal copolymer (a-4) has a terminal hemiformal group of 0.4 mmol/kg, a terminal formyl group of 0.1 mmol/kg, and an unstable terminal group of 0.18% by weight.

### [Production process of polyacetal copolymer (a-5)]

The stable polyacetal copolymer (A) was employed as a polyacetal copolymer (a-5).

The polyacetal copolymer (a-5) has a terminal hemiformal group of 1.2 mmol/kg, a terminal formyl group of 1.2 mmol/kg, and an unstable terminal group of 0.50% by weight.

### [Production process of polyacetal copolymer (a-6)]

The stable polyacetal copolymer (B) was employed as a polyacetal copolymer (a-6).

The polyacetal copolymer (a-6) has a terminal hemiformal group of 0.5 mmol/kg, a terminal formyl group of 0.2 mmol/kg, and an unstable terminal group of 0.19% by weight.

Incidentally, the amount of trioxane (mg/kg) relative to the polyacetal resin was determined in the following way, that is, 1 g of a polyacetal resin (polyacetal copolymer) was dissolved in 10 mL of hexafluoroisopropanol (HFIP), and the obtained solution was reprecipitated in 40mL of acetone. Thereafter, the amount of trioxane (mg/kg) was quantatively determined by means of GC/MS method.

Further, the amount of the terminal hemiformal group, the terminal formyl group, and the unstable terminal group of the polyacetal copolymers were measured as follows.

### [Amount of terminal hemiformal group]

The amount of the terminal hemiformal group was determined by an H-NMR measurement, and quantitatively determined by using a method described in Japanese Patent Application Laid-Open No. 11143/2001 (JP-2001-11143A).

### [Amount of terminal formyl group]

The amount of the terminal formyl group (HCO-) was determined as an amount of a terminal formyloxy group (HCOO-) by an H-NMR measurement as in the case of the terminal hemiformal group, and quantitatively determined simultaneously with that of the terminal hemiformal group by using a method described in Japanese Patent Application Laid-Open No. 11143/2001 (JP-2001-11143A).

### [Amount of unstable terminal group]

The amount of the unstable terminal group is an index regarding polymer quality, and represented as the percentage (% by weight) relative to a polyacetal copolymer based on the following manner: putting 1 g of the polyacetal copolymer and 100 ml of 50% (by volume) methanol aqueous solution containing 0.5% (by volume) of ammonium hydroxide in a pressure tight and airtight container, heat-treating the mixture solution at 180°C for 45 minutes, then cooling and opening the container, and quantitatively determining the amount of formaldehyde dissolved and eluted in the resulting solution.

The melt index was a value (g/10 min.) determined under conditions of 190°C and 2169 g, based on ASTM-D1238.

### 2. Antioxidant "b"

(b-1): Pentaerythritol tetrakis[3-(3,5-di-t-butyl-4-hydroxyphenyl)propionate]
(b-2): Triethylene glycol bis[3-(3-t-butyl-5-methyl-4-hydroxyphenyl)propionate]

### 3. Formaldehyde emission inhibitor "c"

(c-1): Melamine
(c-2): Benzoguanamine
(c-3): CTU-guanamine [manufactured by Ajinomoto Fine-Techno Co., Inc.]
(c-4): Biurea
(c-5): Allantoin
(c-6): 8,12-Eicosadienedioic acid hydrazide ["Amicure UDH", manufactured by Ajinomoto Fine-Techno Co., Inc.]
(c-7): 1,3-Bis(2-hydrazinocarbonylethyl)-5-isopropylhydantoin [manufactured by Ajinomoto Fine-Techno Co., Inc., "Amicure VDH"]
(c-8): Sebacic acid dihydrazide
(c-9): Dodecanedioic acid dihydrazide
(c-10): Creatinine
(c-11): Nylon 6-66-610 [manufactured by Du Pont, "Elvamide 8063R"]
(c-12): Nylon 66 [pulverized matter of deep freezed "Polyplanylon 66" (manufactured by Polyplastics Co., Ltd., mean particle size: 3µm]

### 4. Processing stabilizer "d"

(d-1): Ethylene bis-stearyl amide
(d-2): Ethylene glycol distearate
(d-3): Glycerin monostearate

### 5. Heat stabilizer (metal salt of organic carboxylic acid, alkaline earth metal salt) "e"

(e-1): Calcium 12-hydroxystearate
(e-2): Magnesium oxide
(e-3): Calcium citrate
(e-4): Calcium stearate

### 6. Coloring agent "f"

(f-1): Carbon black (acetylene black)

### 7. Weather (light)-resistant stabilizer "g"

(g-1):

### 2-[2'-Hydroxy-3',5'-bis(α,α-dimethylbenzyl)phenyl]benzotriazole

(g-2):

### Bis(2,2,6,6-tetramethyl-4-piperidyl)sebacate

### 8. Processing auxiliary "h"

(h-1): Distilled water

[Table 1]

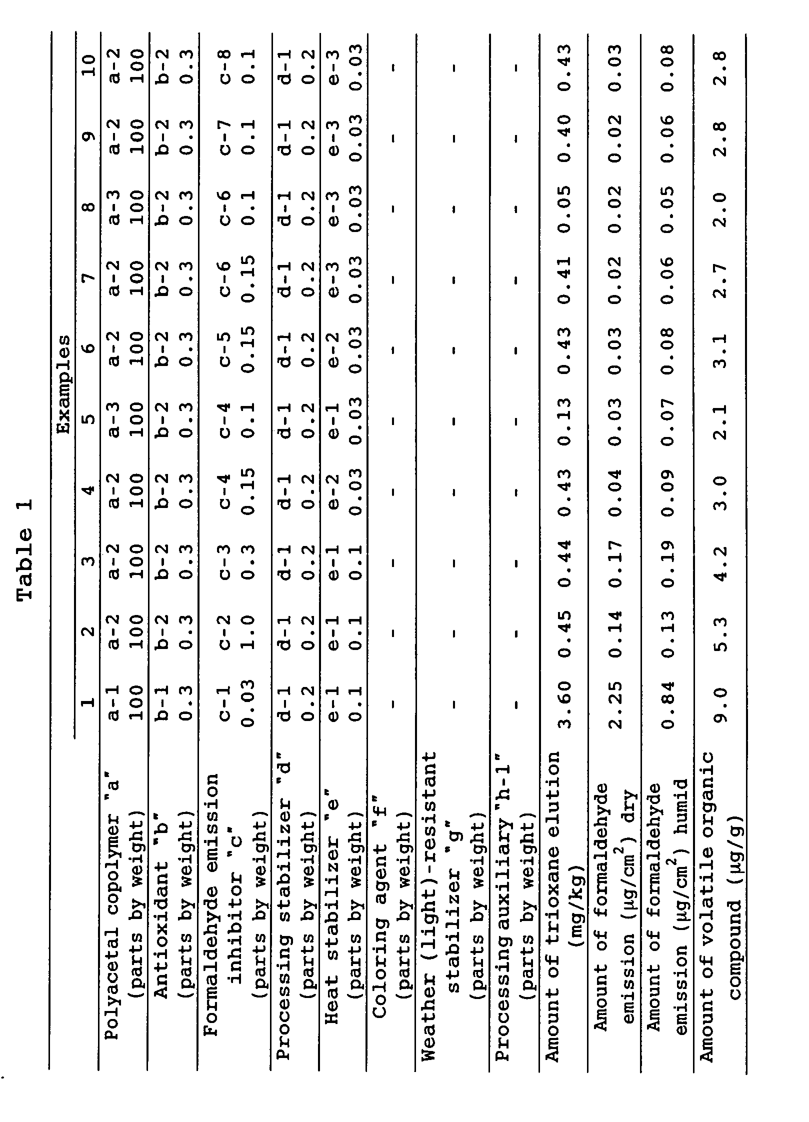

[Table 2]

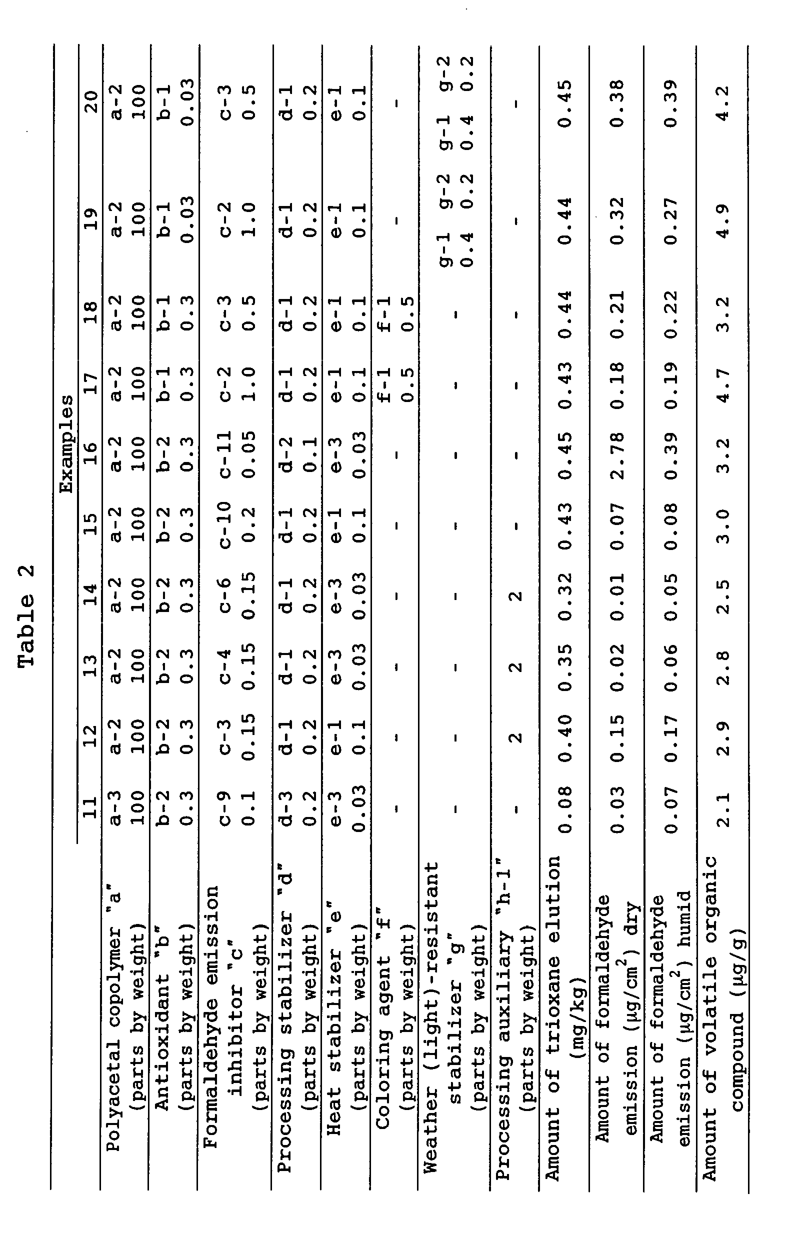

[Table 3]

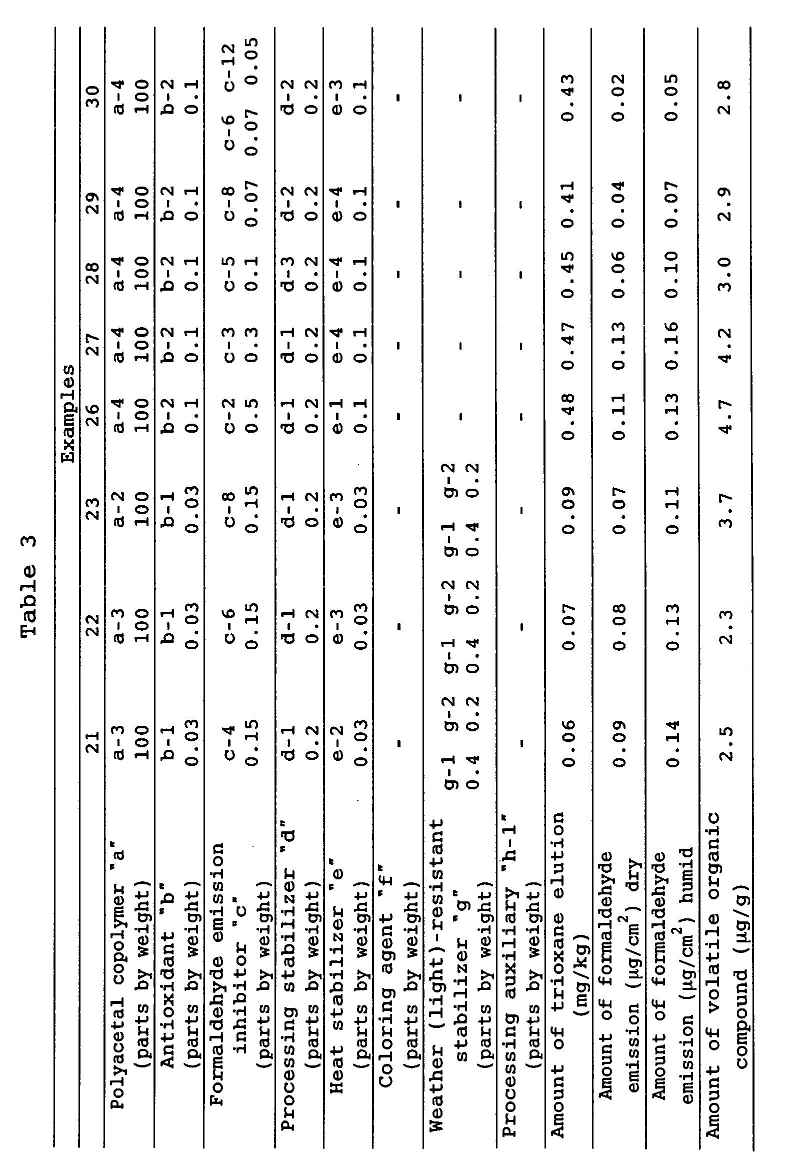

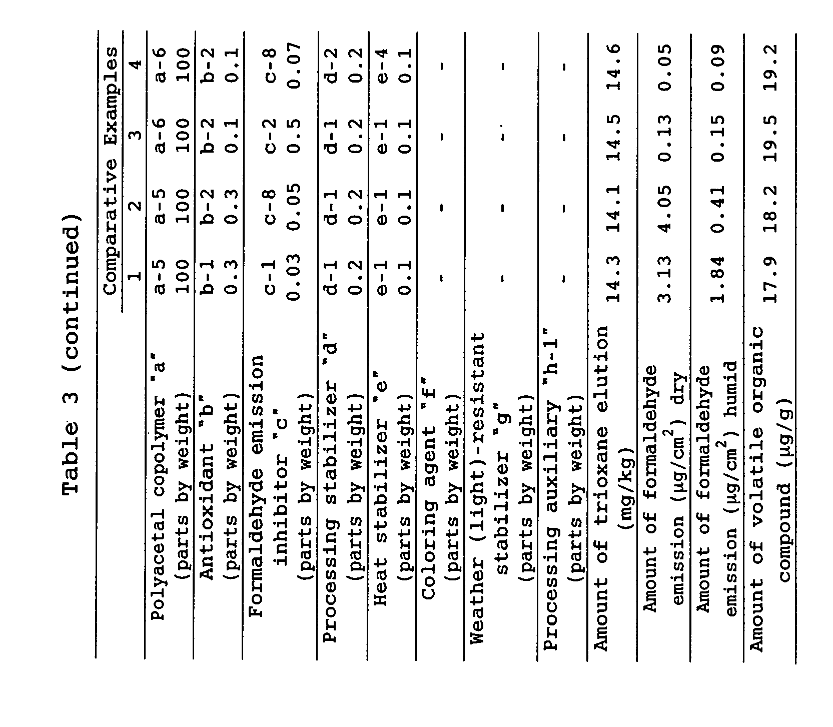

As shown in Tables, the amount of trioxane elution eluted with hot water and the amount of the volatile organic compound was extremely lower in the molded products of Examples than those in Comparative Examples. Moreover, due to formaldehyde emission inhibitors, the amount of formaldehyde emission from the molded product was also remarkably low.

## Claims

1. A polyacetal resin composition which comprises a polyacetal resin and at least one stabilizer selected from the group consisting of an antioxidant, a formaldehyde emission inhibitor, a processing stabilizer, and a heat stabilizer, wherein the trioxane content in the polyacetal resin is not more than 100 ppm.

2. A polyacetal resin composition according to claim 1, wherein the trioxane content is not more than 50 ppm.

3. A polyacetal resin composition according to claim 1, wherein the trioxane content is not more than 10 ppm.

4. A polyacetal resin composition according to claim 1, wherein the polyacetal resin comprises a polyacetal resin in which the trioxane content is reduced by a solvent treatment and/or a heat treatment.

5. A polyacetal resin composition according to claim 4, wherein the polyacetal resin comprises a polyacetal resin in which the trioxane content is reduced by at least one treatment selected from the group consisting of a solvent treatment with a poor solvent for the polyacetal resin, and the heat treatment.

6. A polyacetal resin composition according to claim 5, wherein the solvent treatment is conducted with a solvent being a poor solvent for the polyacetal resin and being a good solvent for trioxane.

7. A polyacetal resin composition according to claim 4, wherein the heat treatment include at least one heat treatment selected from the group consisting of an air flow heat treatment, an inactive gas f low heat treatment, a heated vapor treatment, and a vacuum heat treatment.

8. A polyacetal resin composition according to claim 4 , wherein the polyacetal resin comprises a polyacetal copolymer in which the trioxane content is reduced by a treatment with an aqueous medium or an alcohol-containing aqueous medium under heating of not lower than 80°C.

9. A polyacetal resin composition according to claim 4, wherein the polyacetal resin comprises a polyacetal copolymer in which the trioxane content is reduced by a treatment with a basic aqueous medium under heating of not lower than 80°C.

10. A polyacetal resin composition according to claim 1, wherein the polyacetal resin comprises a polyacetal copolymer having a terminal hemiformal group of not more than 1.2 mmol/kg, and a terminal formyl group of not more than 1.2 mmol/kg.

11. A polyacetal resin composition according to claim 1, wherein the polyacetal resin comprises a polyacetal copolymer having an unstable terminal group of not more than 0.5% by weight.

12. A polyacetal resin composition according to claim 1, wherein the antioxidant comprises at least one member selected from the group consisting of a hindered phenol compound and a hindered amine compound.

13. A polyacetal resin composition according to claim 1, wherein the formaldehyde emission inhibitor comprises at least one compound having an active hydrogen atom and selected from the group consisting of a basic nitrogen-containing compound, an active methylene compound, and a polyphenol compound.

14. A polyacetal resin composition according to claim 1, wherein the formaldehyde emission inhibitor comprises at least one basic nitrogen-containing compound selected from the group consisting of an aminotriazine compound, a guanidine compound, a urea compound, a hydrazine compound, an amino acid compound, an amino alcohol compound, an imide compound, an imidazole compound, and an amide compound.

15. A polyacetal resin composition according to claim 1, wherein the formaldehyde emission inhibitor comprises at least one basic nitrogen-containing compound selected from the group consisting of a melamine compound, a guanamine compound, a creatinine compound, a biurea compound, a cyclic urea compound, a carboxylic acid hydrazide compound, and a polyamide compound.

16. A polyacetal resin composition according to claim 1, wherein the processing stabilizer comprises at least one member selected from the group consisting of a higher fatty acid or a derivative thereof, a polyoxyalkylene glycol, and a silicone compound.

17. A polyacetal resin composition according to claim 1, wherein the heat stabilizer comprises at least one member selected from the group consisting of an organic carboxylic acid or a metal salt thereof, an alkaline or alkaline earth metal compound, a phosphine compound, a hydrotalcite, and a zeolite.

18. A polyacetal resin composition according to claim 1, which comprises
a polyacetal copolymer having a trioxane content of not more than 100 ppm,
an antioxidant,
a formaldehyde emission inhibitor,
a processing stabilizer, and
a heat stabilizer,
wherein, relative to 100 parts by weight of the polyacetal copolymer, the proportion of the antioxidant is 0.005 to 3 parts by weight, the proportion of the formaldehyde emission inhibitor is 0.001 to 20 parts by weight, the proportion of the processing stabilizer is 0.01 to 5 parts by weight, and the proportion of the heat stabilizer is 0.001 to 5 parts by weight.

19. A polyacetal resin composition according to claim 1, which further comprises at least one additive selected from the group consisting of a weather (light)-resistant stabilizer, an impact resistance improver, a gloss control agent, an agent for improving sliding property, a coloring agent, and a filler.

20. A polyacetal resin composition according to claim 19, wherein the weather (light)-resistant stabilizer comprises at least one member selected from the group consisting of a benzotriazole compound, a benzophenone compound, an aromatic benzoate compound, a cyanoacrylate compound, an oxalic anilide compound, a hydroxyphenyl-1,3,5-triazine compound, and a hindered amine compound.

21. A polyacetal resin composition according to claim 19, wherein the impact resistance improver comprises at least one member selected from the group consisting of a thermoplastic polyester, a thermoplastic polyurethane, an acrylic core-shell polymer, and a styrenic elastomer.

22. A polyacetal resin composition according to claim 19, wherein the gloss control agent comprises at least one member selected from the group consisting of an acrylic resin and a styrenic resin.

23. A polyacetal resin composition according to claim 19, wherein the agent for improving sliding property comprises at least one member selected from the group consisting of an olefinic polymer, a silicone-series resin, and a fluorine-containing resin.

24. A polyacetal resin composition according to claim 1, which comprises a pellet of a polyacetal copolymer having a trioxane content of not more than 100 ppm at least coexistent with a formaldehyde emission inhibitor or a master batch containing a formaldehyde emission inhibitor.

25. A process for producing a polyacetal resin composition,which comprisesmelt-mixing a polyacetal resin recited in claim 1 and at least a formaldehyde emission inhibitor with an extruder having an exhaust port, wherein in the melt-mixing process, at least one processing auxiliary selected from the group consisting of water and an alcohol is added to the mixture, and a volatile component is exhausted through the exhaust port.

26. A process for producing a polyacetal resin composition, which comprises mixing a polyacetal resin recited in claim 1 and at least one stabilizer selected from the group consisting of an antioxidant, a formaldehyde emission inhibitor, a processing stabilizer, and a heat stabilizer, wherein at least the formaldehyde emission inhibitor is fed through a side feed port of an extruder.

27. A process for producing a polyacetal resin composition,which comprisesmelt-mixing a polyacetal resin recited in claim 1 and a formaldehyde emission inhibitor with an extruder, wherein the average residence time of melt-mixing is not longer than 300 seconds.

28. A process for producing a polyacetal resin composition, which comprises melt-mixing a polyacetal copolymer recited in claim 1 and at least one stabilizer selected from the group consisting of an antioxidant, a formaldehyde emission inhibitor, a processing stabilizer and a heat stabilizer with an extruder, and extruding the mixture to prepare a pelletized composition, and further subjecting the pelletized composition to a solvent treatment and/or a heat treatment to obtain the polyacetal resin composition.

29. A molded product which comprises a polyacetal resin composition recited in claim 1.

30. A molded product according to claim 29, wherein the amount of trioxane elution extracted from the molded product with distilled water by heating under reflux for 2 hours is not more than 10 mg per 1 kg of the molded product.

31. A molded product according to claim 29, wherein the amount of trioxane elution extracted from the molded product with distilled water by heating under reflux for 2 hours is not more than 5 mg per 1 kg of the molded product.

32. A molded product according to claim 29, wherein the amount of trioxane elution extracted from the molded product with distilled water by heating under reflux for 2 hours is not more than 1 mg per 1 kg of the molded product.

33. A molded product according to claim 29, wherein (1) when the molded product is stored in a closed space for 24 hours at a temperature of 80°C, the emission of formaldehyde therefrom is not more than 1.0 µg per 1 cm² of the surface area of the product, and/or (2) when the molded product is stored in a closed space for 3 hours at a temperature of 60°C under a saturated humidity, the emission of formaldehyde therefrom is not more than 1.2 µg per 1 cm² of the surface area of the product.

34. A molded product according to claim 29 , wherein the amount of a volatile organic compound generated under heating at a temperature of 120°C for 5 hours is, in terms of acetone, not more than 15 µg per 1 g of the molded product.

35. A molded product according to claim 29 , wherein the amount of a volatile organic compound generated under heating at a temperature of 120°C for 5 hours is, in terms of acetone, not more than 10 µg per 1 g of the molded product.

36. A molded product according to claim 29 , wherein the amount of a volatile organic compound generated under heating at a temperature of 120°C for 5 hours is, in terms of acetone, not more than 5 µg per 1 g of the molded product.

37. A molded product according to claim 29, which is at least one member selected from the group consisting of a food grade part, an automotive part, an electric or electronic device part, an architectural or pipeline part, a household utensil or cosmetic article part, a medical device part, and a photographic part.
